# EUROPEAN PATENT APPLICATION

(11) **EP 4 327 899 A1**
(43) Date of publication of application: **28.02.2024**
(21) Application number: 22191538.2
(22) Date of filing: 22.08.2022
(51) Int. Cl.: A63B 71/08, B33Y 10/00

(54) **CUSTOMIZED MODULAR MULTI-MATERIAL MOUTHGUARD AND METHOD OF MAKING THE SAME**

(71) Applicant: Centre Hospitalier Universitaire Vaudois (CHUV), 1011 Lausanne (CH); Ecole Polytechnique Fédérale de Lausanne (EPFL) EPFL-TTO, 1015 Lausanne (CH)
(72) Inventor: BROOME, Martin, 1011 Lausanne (CH); PIOLETTI, Dominique, 1015 Lausanne (CH); NASROLLAHZADEHMAMAGHANI, Naser, 1011 Lausanne (CH)
(74) Representative: J A Kemp LLP

(57) **Abstract**

There is described a mouthguard comprising an externally exposed impact protective region defined by a first material property and configured to cover a front tooth, an internally exposed occlusional cushioning region defined by a second material property and configured to cover a molar tooth, and an internally exposed intermediate region defined by a third material property and configured to be located between the occlusional cushioning region and the impact protective region, wherein said first, second and third material properties are different. A corresponding method of fabricating a mouthguard is also described.

## Description

### FIELD OF THE INVENTION

The present invention relates to a mouthguard, preferably for use in contact sports such as ice hockey, and a method for making a mouthguard.

### BACKGROUND

Athletes involved in various sporting activities may be prone to cranial and/or orofacial injuries in the case of a traumatic head impact. Mouthguards can be worn by athletes to reduce dental damage upon oral impact. However, there is widespread reluctance among athletes to use mouthguards, despite an awareness of their protective advantages, due to their bulky nature and the resulting perceived discomfort. Factors contributing to athletes' comfort include mouthguard retention, appearance, occlusional/labial feel, as well as ease of breathing and speaking which can influence athletes' field performance.

Presently available mouthguards, including off-the-shelf and custom-made mouthguards, require compromises in cost, comfort, protection level and/or lead time.

Non-customised mouthguards, such as off-the-shelf, boil and bite or microwave and bite varieties, are affordable and readily available but are uncomfortable and do not provide effective protection. The heat-softenable material of these mouthguards allows some moulding of the mouthguard shape to the user's teeth. However, the moulding is imprecise and only to a limited extent, and the heat-softenable material is less effective at providing protection from impact. The greater thickness (i.e. perpendicular depth) of this type of mouthguard that is therefore required to sufficiently reduce the risk of injury is at the cost of user comfort. Although the mouthguard may be trimmed, for example with scissors, the improvement to comfort and fit is limited, and any trimming must be carried out inexpertly and imprecisely by the user.

Single-layer customised dental devices may be fabricated by 3D printing with a single material. They may be provided at a lower cost and shorter lead time by dental labs and 3D printing start-ups. However, the single-layer structure provides sub-optimal protection and the thickness required to achieve a desired level of protection compromises user comfort similarly to off-the-shelf varieties.

Well-designed customised composite mouthguards that are produced by expert dentists provide a higher standard of trauma-protective effect and a higher level of athlete comfort simultaneously. However, the high cost, long lead time, and rare availability of expert dentists for the fabrication of such composite mouthguards restricts their widespread use.

US 2006/065277 A1 provides a dual tray boil and bite mouthguard. The mouthguard has an inner tray comprising a softer, heat-softenable plastic and an outer tray comprising a harder plastic. In addition to the problems associated with the thickness and imprecise moulding of boil and bite mouthguards, the requirement to have the hard outer tray surrounding the soft inner tray, to provide structural support to the inner tray, further exacerbates problems associated with bulky mouthguards, including user discomfort and interference with breathing. Ridges on the underside of the hard tray which engage the teeth of the lower jaw, to prevent the relative movement of the mouthguard and lower jaw, further increase the bulkiness of the mouthguard and, due to the sensation of a hard surface abutting the bottom teeth, reduce user comfort.

US 2020/282639 A1 describes the 3D printing of a dental aligner, to straighten teeth, and a mouthguard, to protect teeth. Both devices comprises a single hard polymer layer, which may be beneficial in exerting correcting forces on the teeth during realignment treatments, but provides limited protection during impact due to the negligible cushioning and limited impact force dissipation provided by the single hard polymer layer.

WO 2018/064782 A1 provides a 3D-printed dental splint comprising a first softer laminate facing the teeth and a second harder laminate which surrounds the first laminate. The softer laminate accommodates the teeth, but requires stabilisation and reinforcement by the harder laminate. It can be appreciated that the dental splint of WO 2018/064782 A1 thus has a similar structure and similar drawbacks in relation to bulkiness and user discomfort associated with the dual tray boil and bite mouthguard of US 2006/065277 A1.

### SUMMARY OF THE INVENTION

The present invention provides a mouthguard, optionally comprising:
an externally exposed impact protective region defined by a first material property and configured to cover a front tooth; and
an internally exposed occlusional cushioning region defined by a second material property and configured to cover a molar tooth.

Optionally the first and second material properties are different. Optionally, the externally exposed impact protective region does not cover a molar tooth. Optionally, the internally exposed occlusional cushioning region does not cover a front tooth. Optionally, there is a region between the impact protective region and a front tooth.

The mouthguard may further comprise an intermediate region defined by a third material property. Optionally the third material property is different from the first and second material properties. The intermediate region may be configured to be located between the occlusional cushioning region and the impact protective region.

Optionally, the regions are configured to chemically bond or mechanically interlock.

The present invention provides a mouthguard, optionally comprising:
an externally exposed impact protective region defined by a first material property and configured to cover a front tooth;
an internally exposed occlusional cushioning region defined by a second material property and configured to cover a molar tooth; and
an internally exposed intermediate region defined by a third material property and configured to be located between the occlusional cushioning region and the impact protective region.

Optionally, the first, second and third material properties are different.

The present invention may be a composite mouthguard, for example comprising regions with distinct and different properties. The regions may be made of different materials (i.e. different material compounds/compositions) to provide the different properties. The mouthguard may thus facilitate the differentiation of employed materials in different regions of the mouthguard. The mouthguard thus allows for the more precise utilisation of materials and/or material properties in regions of the mouthguard where their properties will provide the most useful effect. In this way, the protection offered by the mouthguard may be optimised. The more efficient use of materials decreases the thickness of the mouthguard required to confer a desired degree of protection. In this way, the bulkiness of the mouthguard may be reduced and user comfort is improved.

Furthermore, the features described herein provide for a more efficient design of mouthguard. Specifically, the described features provide for the more targeted utilisation of different materials in a composite mouthguard comprising regions with distinct and different properties. By the precise employment of different materials, to provide different material properties to a region of the mouthguard where they confer the greatest protective effect, the protection offered by the mouthguard may be optimised.

The optimisation of the materials employed in the mouthguard further provides that the bulkiness of the mouthguard may be reduced, improving the comfort of the user and reducing interference with the efficiency of processes that are necessary for optimal field performance, such as breathing and speaking.

The different functional properties of the mouthguard may be separately customised in a simple and efficient way, by adjustment of the material properties of the different regions. The separate, distinct adjustment of the different regions provides for the precise and efficient tailoring of the different functions of the mouthguard. The mouthguard may thus be precisely customised to meet the needs of the user.

An interface between the intermediate region and the occlusional cushioning region may comprise mechanical interlocking portions.

An interface between the intermediate region and the impact protective region may comprise mechanical interlocking portions.

Different pieces and/or regions of the mouthguard may thus be joined together by the mechanical interlocking of the interlocking portions on the different pieces and/or regions. The interlocking portions provide for the easy assembly of the mouthguard, without requiring a further securing material such as a glue or sealant. This reduces the complexity of the mouthguard, for example by requiring fewer materials in the fabrication of the mouthguard. Similarly, the efficiency and ease of production is improved by the requirement of fewer processing steps in the fabrication of the mouthguard. Additionally, material and/or production costs may thus be reduced. Some users may be allergic to glues or resins, the use of interlocking portions, instead of glues or resins to join mouthguard pieces, therefore minimises the risk of provoking a harmful sensitivity reaction in a user.

The intermediate region and the occlusional cushioning region may comprise the same material (i.e. the same material compound/composition). This reduces the complexity of the mouthguard, for example by requiring fewer materials and/or processing steps in the fabrication of the mouthguard.

The internal structure of the intermediate region may be different to the internal structure of the occlusional cushioning region.

The occlusional cushioning region may have a porous structure. The occlusional cushioning region may have a perforated structure. This provides for the simple modification of the material properties of the occlusional cushioning region, for example, increasing the porosity and/or perforation of the occlusional cushioning region can reduce its apparent stiffness. This is especially useful in mouthguards having an intermediate region and an occlusional cushioning region comprising the same material.

The intermediate region and/or the occlusional cushioning region may comprise an elastomeric material and/or a polymeric material. The occlusional cushioning region may comprise a material that can resist at least 50% tensile strain.

The hardness of the intermediate region may be greater than the hardness of the occlusional cushioning region.

The hardness of the intermediate region may be from 60 to 95 in Shore A scale. Preferably, the hardness of the intermediate region may be from 75 to 85 in Shore A scale.

At least one interface between regions may comprise a mechanical interlocking portion. Optionally, the mechanical interlocking portion comprises an interlocking feature.

Optionally, the interlocking feature is configured to be positioned so as to reduce discomfort for the user. Optionally, the interlocking feature is configured to be positioned over an area between a first tooth and a second tooth.

At least one region may be configured to be detachable from another region.

Detachable mouthguard pieces of the same type, for example comprising the same region of the mouthguard, may be swapped with one another. Detachable mouthguard pieces may be swapped with pieces having the same or different material properties. By interchanging mouthguard pieces with different properties, the mouthguard can be adapted to meet varying requirements of the end user. For example, the degree of impact protection may be customised by the swapping of impact protective regions. If the mouthguard provokes biting, this causes activation of the neck muscles, which increases head stability. The degree of biting may be customised by the swapping of occlusional cushioning regions. The degree of neck muscle activation and head stabilisation may thus be customised by the swapping of occlusional cushioning regions. In this way, the mouthguard may be adapted for use in different sports, for example different sports requiring different degrees and/or types of protection which may arise from the nature of the sport and/or the anticipated magnitude and/or location of the impact force. In a similar way, a damaged component of the mouthguard can be replaced, thus providing for the long-term use of the mouthguard. For example, a component that has been damaged by traumatic impact and/or through wear and tear during use can be replaced by a new undamaged component.

The mouthguard may comprise a first material (i.e. a first material compound/composition) with a first inherent material property and a second material (i.e. a second material compound/composition) with a second inherent material property. Optionally, the first inherent material property is different from the second inherent material property.

The hardness of the occlusional cushioning region may be from 40 to 80 in Shore A scale. Preferably, the hardness of the occlusional cushioning region may be from 55 to 70 in Shore A scale.

The impact protective region may comprise a thermoplastic material and/or a thermoset material. Optionally, the impact protective region comprises a stress concentration feature. Optionally, the impact protective region is a first impact protective region that is configured to be detachable from another region of the mouthguard. Optionally, the first impact protective region may be interchangeable with a second impact protective region. Optionally, the second impact protective region may comprise different properties to the first impact protective region. Optionally, the second impact protective region may comprise the same properties as the first impact protective region. Optionally, the second impact protective region may have the same appearance as the first impact protective region. Optionally, the second impact protective region may have a different appearance to the first impact protective region.

The Young's modulus of the impact protective region may be from 0.5 to 5 GPa. Preferably, the Young's modulus of the impact protective region may be from 2 to 3 GPa.

The mouthguard may be configured to be anteriorly offset from a front tooth, optionally by at least 1 millimetre. Optionally, the front tooth from which the mouthguard is configured to be anteriorly offset is a central incisor tooth. Optionally, the front tooth from which the mouthguard is configured to be anteriorly offset is a central incisor tooth and/or a lateral incisor tooth and/or a canine tooth.

The anterior offset provides for the more efficient dissipation of energy across the mouthguard, thus improving the protective performance of the mouthguard. The improvement in protective performance conferred by an anterior offset is especially effective in mouthguards comprising a hard insert, such as an impact protective region.

The mouthguard may comprise a gap region in an anterior portion of the mouthguard. Optionally, the gap region comprises a gap of at least 1 millimetre. Optionally, the gap region is configured to be over a front tooth. Optionally, the front tooth is a central incisor tooth. Optionally, the front tooth is a central incisor tooth and/or a lateral incisor tooth and/or a canine tooth.

The gap region provides for the more efficient dissipation of energy across the mouthguard, thus improving the protective performance of the mouthguard. The improvement in protective performance conferred by a gap region is especially effective in mouthguards comprising a hard insert, such as an impact protective region.

The occlusional cushioning region may be configured to cover a single molar tooth. The occlusional cushioning region may be configured to cover two molar teeth. The occlusional cushioning region may be configured to cover a premolar tooth.

The impact protective region may be configured to cover two incisor teeth. The impact protective region may be configured to cover a central incisor tooth and/or a lateral incisor tooth and/or a canine tooth.

The present invention may provide a 3D printed mouthguard, optionally comprising:
a first mouthguard piece; and
a second mouthguard piece.

Optionally, the first and second mouthguard pieces are configured to mechanically interlock. The mechanical interlocking of mouthguard pieces provides for the easy assembly of the mouthguard, without requiring a further securing material such as a glue or sealant. This reduces the complexity of the mouthguard, for example by requiring fewer materials in the fabrication of the mouthguard. Similarly, the efficiency and ease of production is improved by the requirement of fewer processing steps in the fabrication of the mouthguard. Additionally, material and/or production costs may thus be reduced. Some users may be allergic to glues or resins, the use of interlocking portions, instead of glues or resins to join mouthguard pieces, therefore minimises the risk of provoking a harmful sensitivity reaction in a user.

Optionally, the first and second mouthguard pieces are configured to chemically bond. The chemical bonding of two mouthguard pieces fixes the two pieces together. For example, the chemical bonding of two mouthguard pieces can secure the bonded pieces in position and prevent the subsequent separation of the two bonded pieces.

Optionally, the first mouthguard piece is detachable from the second mouthguard piece.

The present invention provides a method of fabricating a mouthguard, the method optionally comprising:
obtaining a digital model of a dental profile;
generating a customised digital model of the mouthguard based on the digital model of the dental profile; and
3D printing a mouthguard based on the customised digital model of the mouthguard.

Optionally, the generating the customised digital model of the mouthguard based on the digital model of the dental profile includes providing an anterior offset of the mouthguard from a front tooth. Optionally, the generating the customised digital model of the mouthguard based on the digital model of the dental profile includes providing a gap region in an anterior portion of the mouthguard.

Optionally, the mouthguard comprises an externally exposed impact protective region defined by a first material property and configured to cover a front tooth.

Optionally, the anterior offset of the mouthguard from a front tooth is an anterior offset from a central incisor tooth. Optionally, the anterior offset of the mouthguard from a front tooth is an anterior offset from a central incisor tooth and/or a lateral incisor tooth and/or a canine tooth.

Optionally, the gap region is configured to be over a front tooth. Optionally, the front tooth is a central incisor tooth and/or a lateral incisor tooth and/or a canine tooth.

Optionally, generating the customised digital model of the mouthguard based on the digital model of the dental profile comprises subtracting the digital model of the dental profile from a digital mouthguard model. The geometry of the mouthguard may thus be accurately customised to the anatomy of the user, providing a mouthguard with a more precise fit and a more predictable protective effect.

The method may comprise generating a first customised digital model of a first mouthguard piece.

The method may comprise generating a second customised digital model of a second mouthguard piece.

Optionally, the first and second customised digital models are generated based on the digital model of the dental profile.

Optionally, the first and second mouthguard pieces are configured to mechanically interlock.

Optionally, the first and second mouthguard pieces are configured to chemically bond.

The method may comprise separately 3D printing the first and second mouthguard pieces based on the first and second customised digital models. For example, the first and second mouthguard pieces may printed using different materials and/or using different printers and/or at different times and/or using a single printer.

The method may comprise concurrently 3D printing the first and second mouthguard pieces based on the first and second customised digital models. For example, the first and second mouthguard pieces may printed at the same time and/or in the same process and/or using a single printer, such as a multijet printer. Optionally, the first and second mouthguard pieces may be concurrently printed using different materials.

The method may comprise simultaneously 3D printing the first and second mouthguard pieces based on the first and second customised digital models. For example, the first and second mouthguard pieces may be simultaneously printed using a multi-material printer.

The present invention provides a method of fabricating a mouthguard, the method optionally comprises obtaining a digital model of a dental profile.

The method may comprise generating a first customised digital model of a first mouthguard piece.

The method may comprise generating a second customised digital model of a second mouthguard piece.

Optionally, the first and second customised digital models are generated based on the digital model of the dental profile.

Optionally, the first and second mouthguard pieces are configured to mechanically interlock.

Optionally, the first and second mouthguard pieces are configured to chemically bond.

The method may comprise separately 3D printing the first and second mouthguard pieces based on the first and second customised digital models.

The method may comprise mechanically interlocking the first and second mouthguard pieces.

The method may comprise chemically bonding the first and second mouthguard pieces.

Optionally, the first mouthguard piece is detachable from the second mouthguard piece.

The present invention provides a method of fabricating a mouthguard, the method optionally comprising obtaining a digital model of a dental profile.

The method may comprise generating a first customised digital model of a first mouthguard piece.

The method may comprise generating a second customised digital model of a second mouthguard piece.

The method may comprise generating a third customised digital model of a third mouthguard piece.

Optionally, the first, second and/or third customised digital models are generated based on the digital model of the dental profile.

Optionally, one of the first, second and third mouthguard pieces are configured to mechanically interlock with a different one of the first, second and third mouthguard pieces.

Optionally, one of the first, second and third mouthguard pieces are configured to chemically bond with a different one of the first, second and third mouthguard pieces.

The method may comprise separately 3D printing the first, second and/or third mouthguard pieces based on the first, second and third customised digital models.

The method may comprise concurrently 3D printing the first, second and/or third mouthguard pieces based on the first, second and third customised digital models.

Optionally, generating the first, second and/or third customised digital models based on the digital model of the dental profile may comprise subtracting the digital model of the dental profile from a digital mouthguard piece model.

The method may comprise providing an interlocking feature.

Optionally, the interlocking feature is configured to be positioned so as to reduce discomfort for the user.

Optionally, the interlocking feature is configured to be positioned over an area between a first tooth and a second tooth.

Optionally, providing an interlocking feature may comprise shaping a first interlocking feature on one of the first, second and/or third customised digital models.

The method may comprise subtracting the first interlocking feature from a different one of the first, second and third customised digital models.

Providing an interlocking feature may comprise generating a digital model of a first interlocking feature. Optionally, the digital model of a first interlocking feature is a separate digital model to the other digital models

The method may comprise subtracting a first portion of the digital model of a first interlocking feature from one of the first, second and/or third customised digital models.

The method may comprise subtracting a second portion of the digital model of a first interlocking feature from a different one of the first, second and/or third customised digital models.

The method may comprise mechanically interlocking one or more of the first, second and/or third mouthguard pieces.

The method may comprise chemically bonding one or more of the first, second and/or third mouthguard pieces.

The method may comprise gluing one or more of the first, second and/or third mouthguard pieces.

The method may comprise fusing one or more of the first, second and/or third mouthguard pieces.

Optionally, generating any one of the first, second and/or third customised digital models may comprise subtracting from any one of the first, second and/or third customised digital models a different one of the first, second and/or third customised digital models.

The method may comprise adjusting the thickness of an externally exposed impact protective region defined by a first material property and configured to cover a front tooth.

The method may comprise adjusting the thickness of an internally exposed occlusional cushioning region defined by a second material property and configured to cover a molar tooth.

Optionally, 3D printing may comprise printing using a photocurable resin. Optionally, 3D printing may comprise exposing the photocurable resin to radiation.

Optionally, 3D printing may comprise printing using thermofusible filaments.

Optionally, the method may comprise printing using a fused deposition 3D printer.

The method may comprise fabricating a mouthguard configured as disclosed herein.

### BRIEF DESCRIPTION OF THE DRAWINGS

Arrangements of the disclosure will be further described, by way of example only, with reference to the accompanying drawings.
Figure 1 depicts a mouthguard;
Figure 2A is a superior view of a mouthguard;
Figure 2B is an inferior view of the mouthguard of Figure 2A;
Figure 3 is an inferior view of a mouthguard;
Figure 4 is a superior view of a mouthguard;
Figure 5A is an anterior view of a mouthguard;
Figure 5B is an anterolateral view of the mouthguard of Figure 5A;
Figure 5C is an anterolateral view of the mouthguard of Figure 5A comprising a detached impact protective region;
Figure 5D is a anterolateral view of a detached impact protective region comprising a stress concentration feature;
Figure 5E is a top view of a detached impact protective region comprising a stress concentration feature;
Figure 6A is an anterior view of part of a mouthguard comprising a detached impact protective region;
Figure 6B is a lateral view of part of the mouthguard of Figure 6A comprising an attached impact protective region;
Figure 7 illustrates a mouthguard applied to an upper dental arch;
Figure 8 depicts a method of fabricating a mouthguard; and
Figure 9 depicts a method of fabricating a mouthguard.

### DESCRIPTION

The present inventors have identified that an impact to the jaw may cause injury by a variety of mechanisms. Specifically, an impact to the jaw may cause injury by direct and indirect mechanisms. Directly, i.e. at the site of impact, the impact force may induce a destructive stress. For example, an impact to the jaw may directly induce a destructive stress on the tooth-bone complex. Indirectly, i.e. at a site different to the site of impact, damage to the brain may be caused by head rotation resulting from the impact to the jaw. For example, impact-induced head rotation may result in traumatic cerebral tissue deformation. Traumatic impact to the jaw may thus lead to damage to the brain resulting in concussion.

Previously available mouthguards provide a basic level of protection from direct injury. The features described herein provide for protection against the multiple different mechanisms of trauma that may be induced by an impact to the jaw, in a way that has not been done previously. It can be appreciated that the features described herein may additionally or alternatively provide for protection against an impact to any location that causes head acceleration and/or deceleration.

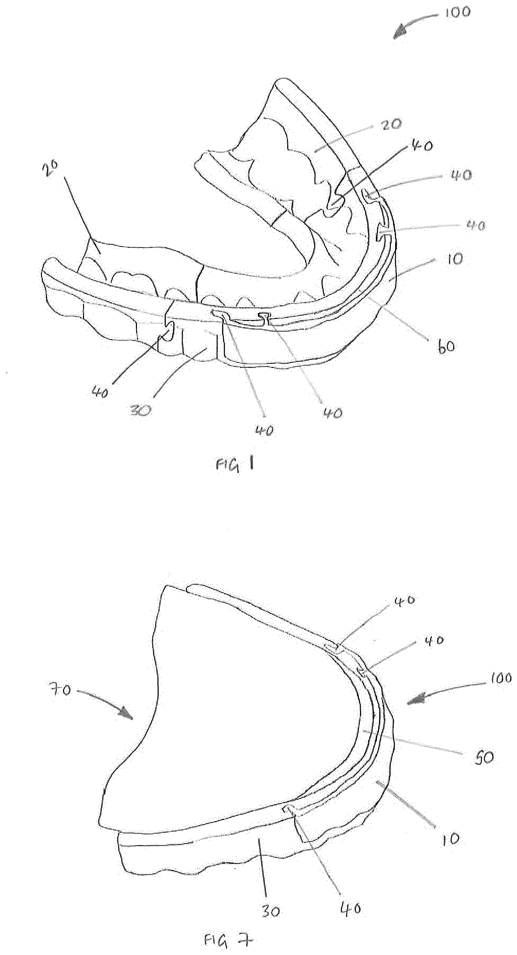

Examples of a mouthguard 100 are provided in Figures 1-7. The mouthguard 100 may comprise an impact protective region 10 and optionally an occlusional cushioning region 20 and/or an intermediate region 30.

The impact protective region 10 is configured to provide protection from direct injury during impact, by providing protection from traumatic impact to the teeth.

The occlusional cushioning region 20 is configured to provide protection from indirect injury during impact, by increasing the stability of the head and/or reducing force transmission to the skull.

For example, by allowing biting of the mouthguard, the occlusional cushioning region 20 provides for the clenching of the jaw and the activation of neck muscles, such as the sternocleidomastoid muscle. The occlusional cushioning region 20 thus provides for reduced rotation and improved head stability during traumatic impact, thereby providing protection from rotation-induced damage to the brain.

Additionally or alternatively, by modification of the configuration of the jaw, for example by providing the separation of the head of the mandibular condyle and the mandibular fossa of the skull, the occlusional cushioning region 20 may reduce force transfer from the jaw to the skull. In this way, the brain is subject to a lower transmitted force during impact and thus protected from damage. By one or more of these described mechanisms for reducing damage to the brain, the occlusion cushioning region 20 may thus provide anti-concussive effects.

The intermediate region 30 is configured to improve the dissipation of energy across the mouthguard. The intermediate region 30 may additionally or alternatively be configured for the attachment of the impact protective region 10 and/or the occlusional cushioning region 20.

The different regions of the mouthguard may be defined by their different properties, such as their different material properties. Additionally or alternatively, the different regions of the mouthguard may be defined by their different materials (i.e. different material compounds/compositions).

For example, the impact protective region 10 may comprise a harder and/or more stiff and/or more rigid and/or more tough material. The impact protective region 10 may have a higher shore hardness and/or Young's modulus compared to the other regions of the mouthguard. For example, the impact protective region 10 may comprise a thermoplastic and/or thermoset material.

The occlusional cushioning region 20 may comprise a less hard and/or more flexible and/or more elastic material. The occlusional cushioning region 20 may have a lower hardness and/or a lower Young's modulus compared to the other regions of the mouthguard.

The intermediate region 30 may comprise a flexible and/or elastic material.

The intermediate region 30 and the occlusional cushioning region 20 may comprise the same type of material. For example, the intermediate region 30 and the occlusional cushioning region 20 may both comprise an elastomeric-type material and/or polymeric-type material and/or a rubber-like material.

The intermediate region 30 and the occlusional cushioning region 20 may have some similar material properties. For example, the occlusional cushioning region 20 and/or the intermediate region 30 may comprise a material that can resist at least 50% tensile strain. The intermediate region 30 and the occlusional cushioning region 20 may have some different material properties. For example, the intermediate region 30 may comprise a material that is more stiff than the occlusional cushioning region 20. The intermediate region 30 may have a higher hardness and/or a higher Young's modulus compared to the occlusional cushioning region 20.

The different regions of the mouthguard may thus provide for the more targeted utilisation of different materials. By the precise employment of different materials, to provide different material properties to a region of the mouthguard where they confer the greatest protective effect, the efficiency of the mouthguard may be improved and the protection offered by the mouthguard may be optimised.

For example, anterior and posterior aspects of the mouthguard may comprise different regions having different material properties.

As exemplified in Figures 1-7, the impact protective region 10 may occupy an anterior region of the mouthguard 100. The anterior region of the mouthguard is configured to cover teeth in an anterior portion of the mouth. The impact protective region 10 may thus cover a region of the mouth that is at a greater risk of traumatic impact. For example, the impact protective region 10 may protect the teeth that are most at risk from impact by a projectile, such as a hockey puck. Preferably, the impact protective region 10 is configured to cover a front tooth of the user.

The portion of the mouthguard occupied by the impact protective region 10 may be customised, for example according to the requirements of the end user. Customisation of the width of the impact protective region 10 allows the customisation of the degree of protection provided. For example, increasing the width of the impact protective region 10 increases the degree of protection provided. However, increasing the width of the impact protective region 10 may additionally decrease the level of comfort of the user. The width of the impact protective region 10 may thus be customised to provide a compromise between the degree of protection and the level of user comfort. For example, the impact protective region 10 may occupy a region in the front half of the mouthguard. Alternatively, the impact protective region 10 may occupy a region extending beyond the front half of the mouthguard.

The number of teeth covered by the impact protective region 10 may be customised, for example according to level of protection required by the user and/or the likely region of impact during use of the mouthguard. Additionally or alternatively, the number of teeth covered by the impact protective region 10 may be customised to provide a compromise between the degree of protection and the level of user comfort. For example, the impact protective region 10 may be configured to cover two incisor teeth. The impact protective region 10 may be configured to cover a central incisor tooth, a lateral incisor tooth, and/or a canine tooth. The impact protective region 10 may be configured to cover two central incisor teeth, two lateral incisor teeth, and/or two canine teeth. The impact protective region 10 may be configured to cover any combination of front teeth.

In Figures 1-7, the occlusional cushioning region 20 occupies a posterior region of the mouthguard 100. The posterior region of the mouthguard is configured to cover teeth in the posterior portion of the mouth. The occlusional cushioning region 20 may thus cover teeth with a greater degree of engagement during clenching of the jaw. For example, the occlusional cushioning region 20 may cover teeth that transmit a greater magnitude of force to the mouthguard during biting. In this way, the cushioning effect of the occlusional cushioning region 20 may be focused to a portion of the mouthguard which is subject to a high loading force during clenching.

For example, the occlusional cushioning region 20 may be configured cover a back tooth of the user, such as a molar tooth. The occlusional cushioning region 20 may be configured to cover a molar tooth and/or a premolar tooth. The occlusional cushioning region 20 may be configured to cover two molar teeth and/or two premolar teeth. The occlusional cushioning region 20 may be configured to cover any combination of back teeth.

Additionally or alternatively, the cushioning effect of the occlusional cushioning region may be focused to a portion of the mouthguard to promote the greater engagement of particular teeth, to provide the stronger and/or specific activation of neck muscles. For example, the occlusional cushioning region may be configured to cover molar teeth for the activation of the muscles of the neck, such as the sternocleidomastoid muscles.

Additionally or alternatively, the posterior position of the occlusional cushioning region 20 may modify the configuration of the jaw, to reduce force transfer from the jaw to the skull. For example, the occlusional cushioning region 20 may have a geometry and/or thickness that, when located in a posterior aspect of the mouthguard, provides increased separation of the condylar head of the mandible and the mandibular fossa of the skull.

Figure 1 depicts a mouthguard 100 that is configured to be applied to an upper dental arch. The mouthguard has an internal surface which is configured to face the teeth and/or proximate gingiva of the upper jaw. The mouthguard has an external surface which is configured to face the buccal mucosa and/or the teeth of the lower jaw. Internal and external aspects of the mouthguard may comprise different regions having different material properties. By the precise employment of different materials, to provide different material properties to a region of the mouthguard where they confer the greatest protective effect, the efficiency of the mouthguard may be improved and the protection offered by the mouthguard may be optimised.

For example, the internal surface of the mouthguard may comprise the occlusional cushioning region 20. The occlusional cushioning region may thus directly abut the occlusional surface of the teeth, to more efficiency engage and/or cushion the teeth.

Preferably, the occlusional cushioning region 20 may occupy mainly inwards facing portions of the mouthguard. For example, the occlusional cushioning region 20 may be internally exposed. Inwards facing portions of the mouthguard occupied by the occlusional cushioning region 20 may include base portions and/or horizontal portions of the mouthguard. For example, the occlusional cushioning region 20 may occupy occlusional aspects of the mouthguard.

As exemplified in Figures 1-4, the occlusional cushioning region 20 may comprise internal and external aspects. For example, Figures 1, 3 and 4 provide occlusional cushioning regions 20 that comprise the full depth of the mouthguard. The occlusional cushioning region 20 may thus associate with the teeth of both the upper and lower jaws, to increase the cushioning effect and/or increase engagement of the teeth during clenching.

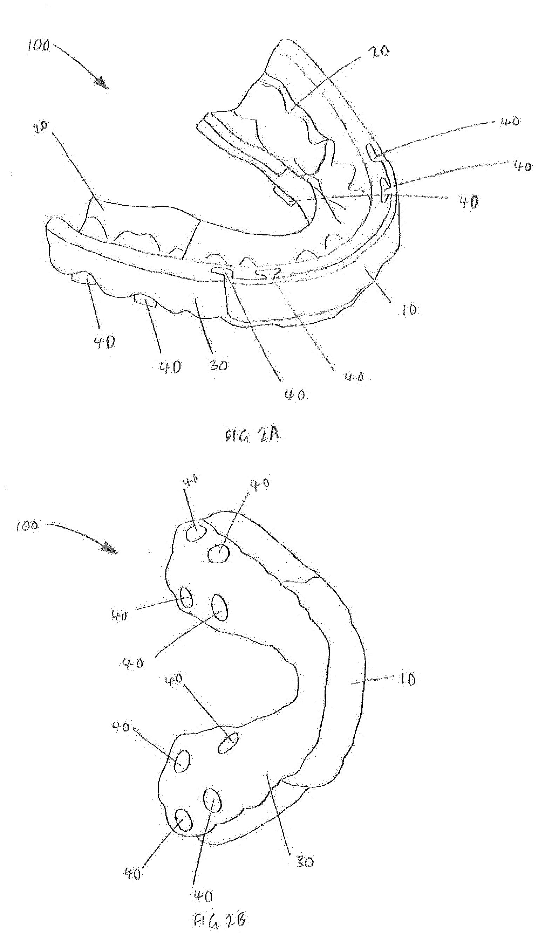

Figures 2A and 2B show occlusional cushioning regions 20 comprising major internal aspects and minor external aspects. The minor external aspects comprise mechanical interlocking portions 40, configured to extend through intermediate region 30, to an external aspect of the mouthguard.

As exemplified in Figures 1-7, the external surface may comprise an impact protective region 10. The impact protective region 10 may thus protect teeth that are most at risk from traumatic impact.

Preferably, the impact protective region 10 may occupy mainly outwards facing portions of the mouthguard. For example, the impact protective region 10 may be externally exposed. Outwards facing portions of the mouthguard occupied by the impact protective region 10 may include side portions and/or vertical portions of the mouthguard. For example, the impact protective region 10 may occupy labial and/or buccal aspects of the mouthguard.

In Figures 1-7, the impact protective region 10 comprises external aspects and does not comprise internal aspects. In this way, the teeth and/or proximate gingiva are not exposed to the hard material of the impact protective region 10 and user comfort is improved. The internal shielding of the hard impact protective region 10 by, for example, the intermediate region 30, improves the safety of the mouthguard during impact by minimising the risk of harm to the user by any hard projections in the mouthguard.

The intermediate region 30 of Figures 1-7 comprises both internal and external aspects of the mouthguard. In this way, the intermediate region 30 may be configured to join the impact protective region 10 to the occlusional cushioning region 20. For example, the intermediate region 30 may mechanically couple the impact protective region 10 to the occlusional cushioning region.

The intermediate region 30 is thus located between the impact protective region 10 and the occlusional cushioning region 20 such that there may be limited or no overlap between the boundaries of the impact protective region 10 and the occlusional cushioning region 20. By the physical separation of the impact protective region 10 and the occlusional cushioning region 20 the interference between the different material properties of the different regions may be reduced and the distinct regions of the mouthguard may more reliably and precisely provide their specialised function.

For example, the horizontal/lateral extent of the impact protective region 10 may have limited or no overlap with the horizontal/lateral extent of the occlusional cushioning region 20. The position of the posterior boundary of the impact protective region 10 may be anterior to the position of the anterior boundary of the occlusional cushioning region 20 (see, for example, Figures 1-4).

The impact protective region 10 may mainly or exclusively occupy non-occlusive aspects of the mouthguard and the occlusional cushioning region 20 may mainly or exclusively occupy occlusive aspects of the mouthguard. The impact protective region 10 may mainly or exclusively occupy external aspects of the mouthguard and the occlusional cushioning region 20 may mainly or exclusively occupy internal aspects of the mouthguard. The impact protective region 10 may be configured not to cover a molar tooth. The occlusional cushioning region 20 may be configured not to cover a front tooth.

The material properties of the mouthguard may be precisely tailored to provide a determined function. For example, specific locations of the mouthguard may have distinct attributes which may be tailored to a particular function. Optionally, the material properties of the mouthguard at a specific location may be optimised to the primary function of the mouthguard at that specific location. Portions of the mouthguard with a similar material property may be defined as a region. Portions of the mouthguard with a similar material property may provide a similar function. Different regions of the mouthguard may be defined by one or more material properties.

The impact protective region 10 may primarily function to protect the teeth from damage by a projectile. The impact protective region 10 may dissipate an impact force. For example, the impact protective region 10 may distribute a loading force, i.e. the impact protective region 10 may distribute a direct/focal impact force to a large area/volume. Optionally, the impact protective region 10 transfers a portion of the loading force to another region of the mouthguard. For example, the impact protective region 10 may transfer a portion of the impact force to the intermediate region 30 and/or the occlusional cushioning region 20. Optionally, the impact protective region 10 may dissipate an impact force across the impact protective region 10. Optionally, the impact protective region 10 dissipates an impact force by irreversible deformation of its polymeric network, such as fracture of the impact protective region 10.

The material properties of the mouthguard may be precisely tailored to provide a determined function. For example, specific locations of the mouthguard may have distinct attributes which may be tailored to a particular function. Preferably, the material properties of the mouthguard at a specific location are optimised to the primary function of the mouthguard at that location. For example, the material properties of a mouthguard region may be tailored to the function of that region.

The impact protective region 10 primarily functions to protect the teeth from damage by a projectile. For example, the impact protective region 10 distributes a loading force to other regions of the mouthguard. For example, the impact protective region 10 may transfer a portion of the loading force to another region of the mouthguard. For example, the impact protective region 10 may transfer a portion of the impact force to the intermediate region 30. Preferably, the portion of the impact force transferred to another region of the mouthguard is smaller than the proportion of the impact force absorbed by the impact protective region 10.

Optionally, the impact protective region 10 may dissipate a loading force, such as an impact force. Optionally, the impact protective region 10 dissipates an impact force across the impact protective region 10.

The material properties of the impact protective region 10 may be selected to confer one or more desired functions. For example, the impact protective region 10 may comprise a stiff and/or tough and/or rigid material. A tough impact protective region 10 can sustain large deformation. A brittle and/or stiff impact protective region 10 can irreversibly deform, such as fracture or crack, optionally at certain impact energies, to dissipate a transmitted load. The impact protective region 10 may comprise a hard material. The impact protective region 10 may comprise a material with plastic properties. Preferably, the impact protective region 10 may be a hard insert on the mouthguard. In this way, the material of the impact protective region 10 confers shock-absorbing properties to the region.

The Young's modulus of the impact protective region 10 may be from 0.5-5 GPa. Preferably, the Young's modulus of the impact protective region 10 is from 2-3 GPa. The hardness of the impact protective region 10 may be greater than 60 Shore D scale. For example, the hardness of the impact protective region 10 may be from 80 to 90 in Shore D scale. Preferably, the impact protective region 10 may have a shore hardness that is greater than the shore hardness of the other regions of the mouthguard. For example, the shore hardness of the impact protective region 10 may be greater than the shore hardness of the occlusional cushioning region 20 and/or the intermediate region 30.

The impact protective region 10 may comprise a material with a desired material property. For example, the material of the impact protective region 10 may confer a desired mechanical property. Optionally, the impact protective region 10 may comprise a plastic material. Preferably, the impact protective region 10 comprises a thermoplastic material and/or a thermoset material.

The impact protective region 10 may have material properties that are optimised and/or tailored for use in the human body. For example, the impact protective region 10 may comprise a biocompatible material and/or a material with improved biocompatibility. In this way, the impact protective region 10 may have material properties optimised for contact with human tissue.

The impact protective region 10 may comprise a material with improved tear resistance. In this way, the material properties of the impact protective region 10 may improve the longevity of the mouthguard.

The impact protective region 10 may comprise a 3D printable material, such as a resin and/or a filament. The impact protective region 10 may comprise a commercially available resin, such as for SLA (stereolithography), DLP (digital light processing), LED (light-emitting diode), and/or Polyjet printing. The impact protective region 10 may comprise a commercially available filament, such as for FDM (fused deposition modelling) printing. For example, the impact protective region 10 may comprise MED610, RGD-450 and/or PC-ABS (Stratasys), and/or FLSGAM01 and/or FLDLCL02 (Formlabs), and/or M2R-TN (3D Systems), and/or GR-19 OA and/or GR-10 guide (printodent), and/or similar 3D printable materials from known suppliers, such as DETAX, Dreve, Keyprint, and/or Carbon. The impact protective region 10 may comprise custom 3D printable materials. The 3D printable biocompatible material may confer any desirable material property to the impact protective region 10. For example, the impact protective region 10 may comprise a 3D printable biocompatible material. Preferably, the impact protective region 10 may comprise a 3D printable biocompatible rigid resin.

The geometry of the impact protective region 10 may confer one or more desired properties to the impact protective region 10. For example, the impact protective region 10 may comprise contours corresponding to the anatomy of the user, such as oral and/or dental anatomy. Preferably, the impact protective region 10 may comprise partial and/or full teeth contours and/or contours corresponding to contours of an underlying mouthguard region, such as the teeth-engaging contours of an intermediate region 30. In this way, the geometry of the impact protective region 10 may be customised to the anatomy of the user.

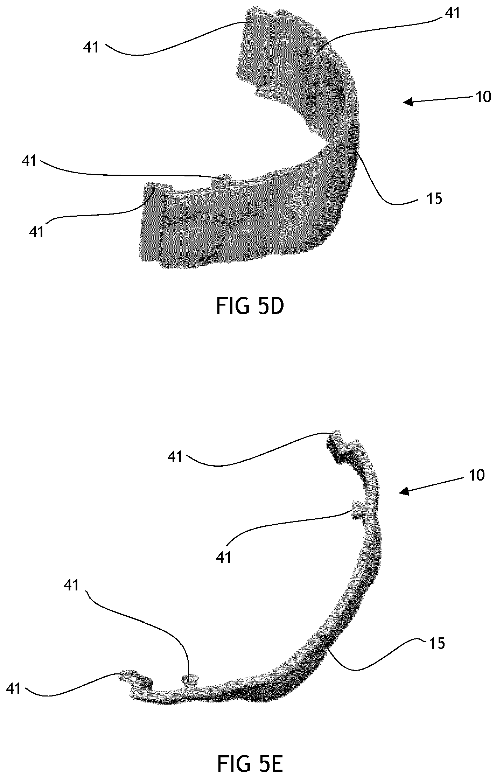

The impact protective region 10 may comprise a stress concentration feature 15. For example, a predefined groove or crack line can be incorporated on the impact protective region 10. Figures 5D and 5E depict an impact protective region 10 comprising a stress concentration feature 15. The stress concentration feature is shown as a generally vertical groove on the anterior face of the impact protective region 10. As shown, the stress concentration feature 15 may be centrally located on the impact protective region 10. Other orientations and locations of the stress concentration feature 15 are possible.

The stress concentration feature 15 may be configured to deform and/or fracture when the impact protective region 10 is subject to an impact force. In this way, the stress concentration feature 15 assists in the dissipation of the impact force and may improve the protection provided by the impact protective region 10. For example, the stress concentration feature 15 may be configured to reduce the magnitude of force transmitted from the impact protective region 10 to the other regions of the mouthguard.

The stress concentration feature 15 may be, for example, a subregion of the impact protective region 10 with a different thickness to the rest of the impact protective region 10. For example, the stress concentration feature 15 may have a thickness that is less than the thickness of the rest of the impact protective region 10. Preferably, the stress concentration feature 15 is a recess in the surface of the impact protective region 10.

The dimensions of the impact protective region 10 may confer one or more desired properties to the impact protective region 10. For example, the thickness of the impact protective region 10 is configured to provide a desired level of protection from trauma. Additionally, the thickness of the impact protective region 10 may provide a desired level of comfort to the user. Preferably, the thickness of the impact protective region 10 is a compromise between the level of impact protection and the level of user comfort. Preferably, the thickness of the impact protective region 10 may be from 0.8-4.0 millimetres, more preferably 0.9 to 2.0 millimetres, more preferably still 1.0 to 1.5 millimetres.

It can be appreciated that customisation of the geometry and/or thickness and/or material properties of the impact protective region 10, facilitates the customisation of the protective performance of the mouthguard. For example, increasing the thickness and/or increasing the hardness of the impact protective region 10 may increase the degree of protection of the impact protective region 10 and/or the mouthguard. In this way, the degree of protection of the mouthguard may be tailored to the needs of the user, for example, to suit different sports.

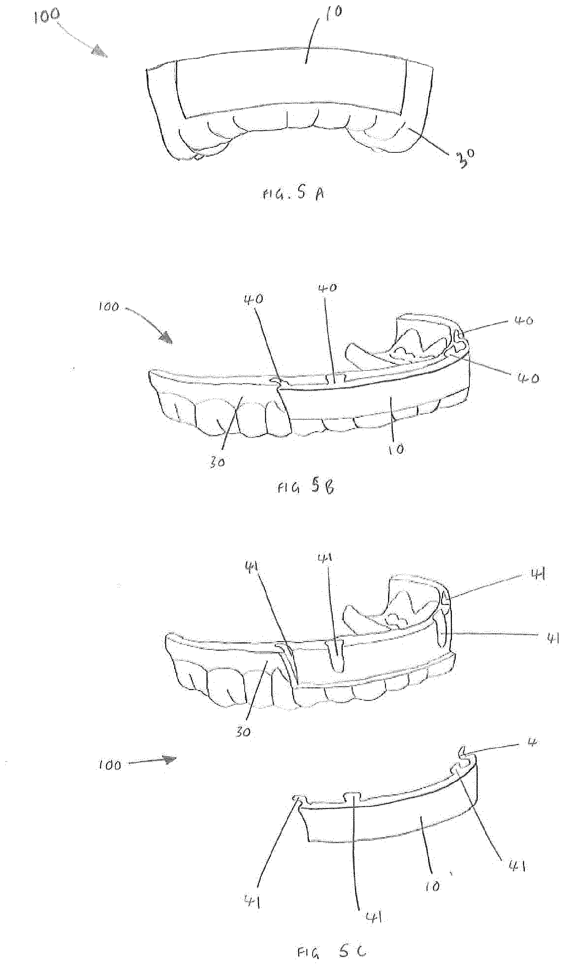

The impact protective region 10 may be configured to be detached from the mouthguard. For example, the impact protective region 10 may be configured to be detachable from the intermediate region 30 and/or the occlusional cushioning region 20. The mouthguard 100 of Figures 5A-5C comprises a detachable impact protective region 10. Figures 5A and 5B show detachable impact protective region 10 in an attached configuration, whereby detachable impact protective region 10 is attached to the intermediate region 30. Figure 5C shows detachable impact protective region 10 in a detached configuration, whereby detachable impact protective region 10 is detached from the intermediate region 30.

It can be appreciated that the impact protective region 10 may be slid into the attached position. In Figures 5A-5C, for example, one or more interlocking features 41 of the impact protective region 10 may slide along (i.e. in a parallel/longitudinal direction to the long axis of) one or more interlocking features 41 of the intermediate region 30. In this way, interlocking features 41 may act as rails to guide a detachable mouthguard piece into an attached position.

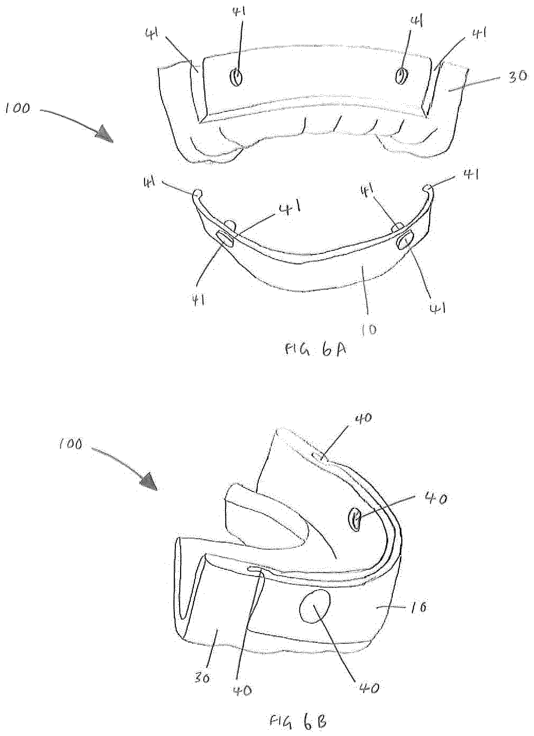

Additionally or alternatively, one or more interlocking features 41 of the impact protective region 10 may push into (i.e. in a perpendicular/lateral direction to the long axis of) one or more interlocking features 41 of the intermediate region 30 (see, for example, Figures 6A-6B). In this way, interlocking features 41 may act to "snap" a detachable mouthguard piece into an attached position.

The impact protective region 10 may be configured to be replaceable. For example, a first impact protective region 10 may be detached from the mouthguard and replaced with a second impact protective region 10. Optionally, the mouthguard may have a plurality of interchangeable impact protective regions 10.

Optionally, the impact protective region 10 may be configured to be detachable after the impact protective region 10 has been subject to an impact force. For example, the impact protective region 10 may be configured to be detachable only after the impact protective region 10 has been subject to a loading force. In this way, a deformed and/or fractured impact protective region 10 may be removed from the mouthguard replaced by a new and/or undamaged impact protective region 10. The mouthguard may thus be reused even after the mouthguard and/or the impact protective region 10 has been subject to an impact force. The level of protection of the mouthguard and/or impact protective region 10 may thus be restored after the mouthguard and/or the impact protective region 10 has been subject to an impact force.

The impact protective region 10 may be configured to be removed from the mouthguard when it has not been subject to an impact force. For example, a first impact protective region 10 with a first set of properties may be removed from a mouthguard. Optionally, the first impact protective region 10 may be replaced with a second impact protective region 10. The second impact protective region 10 may have properties that are different to the properties of the first impact protective region 10. For example, the second impact protective region may have surface design and/or appearance and/or Young's modulus and/or hardness and/or dissipative capacity that is different to the first impact protective region 10. In this way, different material properties may be conferred to the mouthguard. For example, different material properties may be conferred to the mouthguard without requiring replacement of the mouthguard and/or fabrication of a new mouthguard in its entirety. The mouthguard may thus be adapted to different sports. For example, the mouthguard may be adapted different sports with anticipated impact forces of a different nature and/or magnitude.

An original impact protective region 10 may be replaced by a new impact protective region 10 with a different appearance to the original impact protective region 10. For example, a different colour, or a different design of the impact protective region 10. The mouthguard may thus be customised to the requirements or desires of the user.

As discussed above, the occlusional cushioning region 20 is configured to provide protection from indirect injury during impact, by increasing the stability of the head and/or reducing force transmission to the skull.

For example, by allowing biting of the mouthguard, the occlusional cushioning region 20 provides for the clenching of the jaw and the activation of neck muscles, such as the sternocleidomastoid muscle. The occlusional cushioning region 20 thus provides for reduced rotation and improved head stability during traumatic impact, thereby providing protection from rotation-induced damage to the brain.

Additionally or alternatively, by modification of the configuration of the jaw, for example by providing the separation of the head the mandibular condyle and the mandibular fossa of the skull, the occlusional cushioning region 20 may reduce force transfer from the jaw to the skull. In this way, the brain is subject to a lower transmitted force during impact and thus protected from damage. By one or more of these described mechanisms for reducing damage to the brain, the occlusion cushioning region 20 may thus provide anti-concussive effects. In this way, the present mouthguard may qualify as a medical device, for example, the present mouthguard may qualify as a class I medical device.

The mouthguard may comprise a single occlusional cushioning region 20. For example, the mouthguard may comprise an occlusional cushioning region 20 on only one side of the mouthguard. The mouthguard may comprise a plurality of occlusional cushioning regions 20. For example, the mouthguard may comprise an occlusional cushioning region 20 on both sides of the mouthguard. Preferably the mouthguard comprises a first occlusional cushioning region 20 and a second occlusional cushioning region 20. For example, the mouthguard may comprise a right occlusional cushioning region 20 and a left occlusional cushioning region 20. The mouthguards 100 of Figures 1-4 comprise first and second occlusional cushioning regions 20.

The material properties of the occlusional cushioning region 20 may be selected to confer one or more desired functions. For example the occlusional cushioning region 20 may comprise a flexible material and/or a soft material and/or a less hard material.

Optionally, the occlusional cushioning region 20 may be a soft insert on the mouthguard. For example, the mouthguard 100 of Figures 2A and 2B comprises an occlusional cushioning region 20 that is a soft insert on the intermediate region 30. In this way, the occlusional cushioning region 20 may be supported by the intermediate region 30.

The occlusional cushioning region 20 may comprise a material with elastic properties. For example, the occlusional cushioning region 20 may be hyperviscoelastic and/or demonstrate non-linear behaviour following deformation. Optionally, the occlusional cushioning region 20 may comprise a hyperelastic material and/or a rubber-like material and/or an elastomeric material and/or a polymeric material. The occlusional cushioning region 20 may comprise a material capable of resisting a tensile strain of at least 50%. The occlusional cushioning region 20 may have a lower shore hardness. For example, the hardness of the occlusional cushioning region 20 may be from 40-80 in Shore A scale. Preferably the hardness of the occlusional cushioning region 20 is from 55-75 in Shore A scale. The occlusional cushioning region 20 may have a Young's modulus that is less than the Young's modulus of the other regions of the mouthguard. For example, the Young's modulus of the occlusional cushioning region 20 may be less than the Young's modulus of the impact protective region 10 and/or the intermediate region 30. Preferably, the occlusional cushioning region 20 has a Compressive Young's modulus that is less than the Compressive Young's modulus of the other regions of the mouthguard. For example, the occlusional cushioning region 20 may have a Compressive Young's modulus from 10-25 MPa around 20% strain range.

It can be appreciated that customisation of the material properties of the occlusional cushioning region 20, allows the customisation of the protective performance of the mouthguard. For example, decreasing the hardness and/or changing the Young's modulus of the occlusional cushioning region 20 increases the degree of biting and/or the degree of jaw clenching and/or the degree of neck muscle engagement and/or the degree of head stability. In this way, the degree of protection of the mouthguard can be tailored to the needs of the user, for example, to suit different sports.

The occlusional cushioning region 20 may comprise a material that confers one or more desired material property. For example, the material of the occlusional cushioning region 20 may confer a desired mechanical property. Optionally, the occlusional cushioning region 20 may comprise an elastic and/or hyperviscoelastic material, optionally from a family of thermoplastic material and/or a thermoset material. Preferably the occlusional cushioning region 20 comprises an elastomeric material and/or a flexible polymeric material.

The occlusional cushioning region 20 may have material properties optimised for use in the human body. For example, the occlusional cushioning region 20 may comprise a biocompatible material and/or a material with improved biocompatibility. In this way, the material properties of the occlusional cushioning region 20 may be optimised for contact with human tissue.

Optionally, the occlusional cushioning region 20 may comprise a material with improved tear resistance. In this way, the material properties of the occlusional cushioning region 20 may improve the longevity of the mouthguard.

The occlusional cushioning region 20 may comprise a 3D printable material, such as a resin and/or a filament. The occlusional cushioning region 20 may comprise a commercially available resin, such as for SLA (stereolithography), DLP (digital light processing), LED (light-emitting diode), and/or Polyjet printing. The occlusional cushioning region 20 may comprise a commercially available filament, such as for FDM (fused deposition modelling) printing. For example, the occlusional cushioning region 20 may comprise Foto-Dent Gingiva (Dreve), and/or NinjaFlex (Ninjatech), and/or Visijet M2E/BK70 (3D Systems), and/or GR-15.1 Gingiva (printodent). The occlusional cushioning region 20 may comprise custom 3D printable materials. The 3D printable biocompatible material may confer any desirable material property to the occlusional cushioning region 20. For example, the occlusional cushioning region 20 may comprise a 3D printable biocompatible material. Preferably, the occlusional cushioning region 20 may comprise a 3D printable biocompatible dissipative resin.

The geometry of the occlusional cushioning region 20 may confer one or more desired properties to the occlusional cushioning region 20. For example, the occlusional cushioning region 20 may comprise contours corresponding to the anatomy of the user, such as oral and/or dental anatomy. Preferably, the occlusional cushioning region 20 may comprise partial and/or full teeth-engaging contours. In this way, the geometry of the occlusional cushioning region 20 may be customised to the anatomy of the user.

The dimensions of the occlusional cushioning region 20 may confer one or more desired properties to the occlusional cushioning region 20. For example, a sufficient thickness of the occlusional cushioning region 20 may provide sufficient cushioning during clenching and thus provide a sufficient degree of neck muscle activation for effective head stabilisation. A sufficient thickness of the occlusional cushioning region 20 may provide sufficient separation of the mandibular condyle and the mandibular fossa, thus reducing the transmission of impact force from the jaw to skull for effective protection against brain injury in impact to the jaw.

Customisation of the thickness of the occlusional cushioning region 20 allows the customisation of the degree of protection provided. For example, increasing the thickness of the occlusional cushioning region 20 increases the possible degree of tooth engagement and/or clenching and thus the degree of muscle activation. The degree of head stabilisation may thus be customised. For further example, increasing the thickness of the occlusional cushioning region 20 increases the degree of separation of the mandibular condyle and the mandibular fossa, thus reducing the transmission of impact force from the jaw to the skull. However, increasing the thickness of the occlusional cushioning region 20 may additionally decrease the level of comfort of the user. Preferably, the thickness of the occlusional cushioning region is customised to provide a compromise between the degree of protection and the level of user comfort. Preferably, the thickness of the occlusional cushioning region 20 may be from 1.5-6.0 millimetres, more preferably 2.0 to 5.0 millimetres, yet more preferably 2.5 to 4.0 millimetres.

The internal structure of the occlusional cushioning region 20 may confer one or more desired material properties to the occlusional cushioning region 20. For example, modification of the internal structure of the occlusional cushioning region 20 may allow the modification of the inherent material properties of the material of the occlusional cushioning region 20.

For example, increasing the porosity of the occlusional cushioning 20 region reduces the stiffness of the occlusional cushioning region 20. The overall material properties of the occlusional cushioning region 20 may thus be modified in a simple and efficient way. Preferably, in mouthguards comprising an occlusional cushioning region 20 and an intermediate region 30 comprising the same material (i.e. the same material compound/composition) with the same inherent material properties, modification of the internal structure of the occlusional cushioning region 20 allows the imparting of different overall and/or apparent material properties to the occlusional cushioning region 20, compared to the intermediate region 30.

It can be appreciated that the degree of change to the inherent material properties of a region may be customised by the degree of change to the internal structure of the region. In this way, the stiffness of the occlusional cushioning region 20 may be modulated by adjustment of the internal structure, such as the adjustment of the degree of porosity and/or perforation. The stiffness of the occlusional cushioning region 20 may be reduced to the desired degree by increasing porosity and/or perforation of the occlusional cushioning region 20.

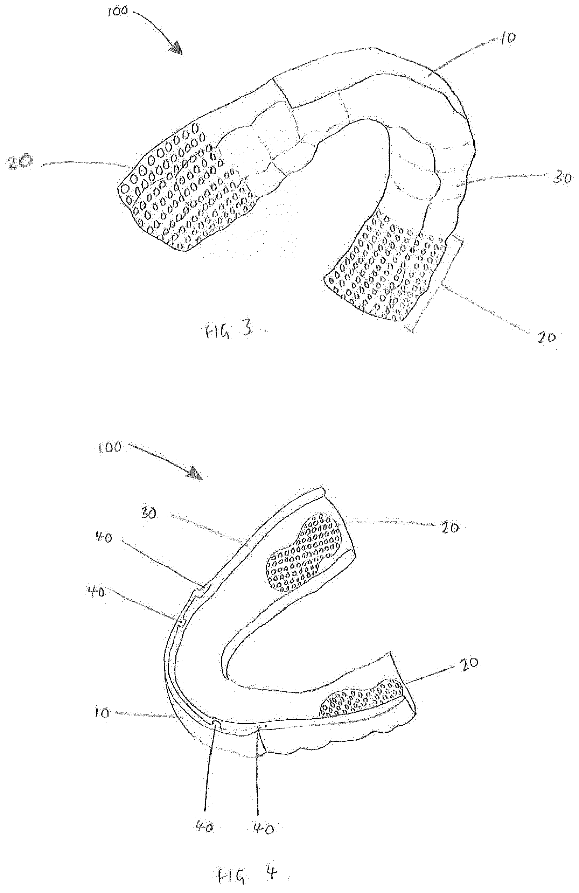

In the mouthguards of Figures 3 and 4 the occlusional cushioning region 20 has a porous structure.

A porous occlusional cushioning region 20 may be on an occlusional aspect only. For example, in Figure 4, the occlusional cushioning region 20 has a porous structure. The occlusional cushioning region 20 of the mouthguard 100 of Figure 4 is located on an occlusional aspect of the mouthguard. The occlusional cushioning region 20 of the mouthguard 100 of Figure 4 is located within teeth engaging contours.

A porous occlusional cushioning region 20 may be internally and/or externally exposed. For example, the occlusional cushioning region 20 of both of Figures 3 and 4 are both internally and externally exposed, i.e. the porous structure is on internal and external surfaces of the mouthguard. A porous occlusional cushioning region 20 may be on occlusional and/or labial and/or proximate gingival aspects. For example the porous occlusional cushioning region 20 in Figure 3 comprises occlusional and labial and proximate gingival aspects.

The occlusional cushioning region 20 may comprise two materials. For example, the occlusional cushioning region 20 may comprise a porous material with a gel-like material infused there between. In the mouthguard of Figure 4, the holes of the porous occlusion cushioning region 20 are filled with a gel-like material. The gel-like material may have different material properties to the porous material of the occlusional cushioning region 20. The infusion of the gel-like material may thus provide for the customisation of an overall material property of the occlusional cushioning region 20. For example, the gel-like material may improve the shock absorbency of the occlusional cushioning region 20. In this way, the overall material properties of the occlusional cushioning region may be tailored to the requirements of the end user.

The intermediate region 30 may assist in the dissipation of an impact (i.e. loading) force. For example, the intermediate region 30 may dissipate an impact force across the intermediate region 30by deformation of the intermediate region 30. Optionally, the intermediate region 30 may distribute a loading force. In this way, the intermediate region 30 may be a shock absorbing component.

Optionally, the intermediate region 30 transfers a loading force to and/or from other regions of the mouthguard. For example, the intermediate region 30 may transfer a portion of the impact force from the impact protective region 10 to the intermediate region 30 and/or the occlusional cushioning region 20.

The material properties of the intermediate region 30 may be selected to optimise one or more desired functions of the intermediate region 30. For example, the intermediate region 30 may comprise a flexible material and/or a soft or tough material. For example, the intermediate region 30 may be softer than the impact protective region 10. The intermediate region 30 may comprise a tough and/or less soft material. For example, the intermediate region 30 may be harder than the occlusional cushioning region 20.

The intermediate region 30 may comprise a material with viscoelastic properties. For example, the intermediate region 30 may behave differently at different loading rates and/or demonstrate non-linear behaviour following deformation. Optionally, the intermediate region 30 may comprise a hyperviscoelastic material and/or a rubber-like material and/or an elastomeric material and/or a polymeric material. The material of the intermediate region 30 can be capable of sustaining large deformations. The intermediate region 30 may comprise a material capable of resisting a tensile strain of at least 50%. The hardness of the intermediate region 30 may be from 60-95 in Shore A scale. Preferably the hardness of the intermediate region 30 may be from 80-90 in Shore A scale.

The intermediate region 30 may have a Young's modulus that is different from the Young's modulus of another region of the mouthguard. For example, the Young's modulus of the intermediate region 30 may be greater than the Young's modulus of the occlusional cushioning region 20. The intermediate region 30 may have a Young's modulus that is less than the Young's modulus of another region of the mouthguard. For example, the Young's modulus of the intermediate region 30 may be less than the Young's modulus of the impact protective region 10. Preferably, the intermediate region 30 has a Compressive Young's modulus that is different from the Compressive Young's modulus of another region of the mouthguard. For example, the intermediate region 30 may have a Compressive Young's modulus from 15-40 MPa around 20% strain range

The intermediate region 30 may comprise a material that confers one or more desired material property to the intermediate region 30. Preferably, the intermediate region 30 comprises a thermoplastic material and/or a thermoset material.

The intermediate region 30 may have material properties optimised for use in the human body. For example, the intermediate region 30 may comprise a biocompatible material and/or a material with improved biocompatibility. In this way, the material properties of the intermediate region 30 be optimised for contact with human tissue.

The intermediate region 30 may comprise a material with improved tear resistance. In this way, the material properties of the intermediate region 30 may improve the longevity of the mouthguard.

The intermediate region 30 may comprise a 3D printable material, such as a resin and/or a filament. The intermediate region 30 may comprise a commercially available resin, such as for SLA (stereolithography), DLP (digital light processing), LED (light-emitting diode), and/or Polyjet printing. The impact protective region 10 may comprise a commercially available filament, such as for FDM (fused deposition modelling) printing. For example, the intermediate region 30 may comprise FDM TPU 92A (Stratasys), and/or Foto-Dent IBT (Dreve), and/or NinjaFlex (Ninjatech), and/or KeyOrtho IBT (Keyprint), and/or ID2045 (Arnitel), and/or GR-18.1 IB (printodent) and/or Freeprint IBT (Detax). The intermediate region 30 may comprise custom 3D printable materials. The 3D printable biocompatible material may confer any desirable material property to the intermediate region 30. For example, the intermediate region 30 may comprise a 3D printable biocompatible material. Preferably, the intermediate region 30 may comprise a 3D printable biocompatible dissipative resin.

The geometry of the intermediate region 30 may confer one or more desired properties to the intermediate region 30. For example, the intermediate region 30 may comprise contours corresponding to the anatomy of the user, such as oral and/or dental anatomy. Preferably, the intermediate region 30 may comprise partial and/or full teeth-engaging contours. In this way, the geometry of the intermediate region 30 may be customised to the anatomy of the user.

Preferably, the intermediate region 30 comprises a rail component. For example, the intermediate region 30 may have a U-shaped vertical cross section (see, for example, Figures 1-6). Additionally or alternatively, the intermediate region 30 may be a U-shaped component. For example, the intermediate region 30 may have a U-shaped horizontal cross-section (see, for example, Figures 1-6).

The intermediate region 30 may be configured to provide a mounting surface for the impact protective region 10 and/or the occlusional cushioning region 20. For example, the intermediate region 30 may comprise a recess that is configured to accommodate the impact protective region 10. Figures 5C and 6A illustrate exemplary intermediate regions 30 comprising a recess that is configured to accommodate the impact protective region 10.

The intermediate region 30 may comprise a recess that is configured to accommodate the occlusional cushioning region 20. For example, Figures 2A and 2B illustrate occlusional cushioning region 20 disposed in a recess in an internal surface of the rail-shaped intermediate region 30. Optionally, the intermediate region 30 may comprise a first recess that is configured to have a complementary shape to the impact protective region 10. The intermediate region 30 may comprise a second recess that is configured to have a complementary shape to the occlusional cushioning region 20. The impact protective region 10 and/or the occlusional cushioning region 20 may comprise a layer configured to be disposed on a portion of the intermediate region 30. In this way, the intermediate region 30 may be configured to join the impact protective region 10 to the occlusional cushioning region 20.

Optionally, the intermediate region 30 may mechanically couple the impact protective region 10 to the occlusional cushioning region 20. Preferably, a posterior aspect of the intermediate region 30 may comprise an interface with the occlusional cushioning region 20. An anterior aspect of the intermediate region 30 may comprise an interface with the impact protective region 10. For example, the intermediate region 30 may be disposed between the impact protective region 10 and the occlusional cushioning region 20 (see, for example, Figure 1).

The dimensions of the intermediate region 30 may confer one or more desired properties to the intermediate region 30. For example, the thickness of the intermediate region 30 may confer sufficient protection to the teeth and/or proximate gingiva during traumatic impact. The thickness of the intermediate region 30 may provide a desired level of comfort to the user. For example, the thickness of the intermediate region 30 may be a compromise between a desired level of protection and a desired level of user comfort. Preferably, the thickness of the intermediate region 30 may be from 2.5-5.0 millimetres, more preferably 3.0 to 4.5 millimetres, yet more preferably 3.2 to 4.0 millimetres. The thickness of the intermediate region 30 may vary across different portions of the intermediate region 30. For example, the thickness of the intermediate region may vary across different portions from 1 to 4 millimetres.

It can be appreciated that the intermediate region 30 and the occlusional cushioning region 20 may comprise different materials (i.e. different material compounds/compositions) with different inherent material properties. For example, the occlusional cushioning region 20 may comprise a softer rubbery material and the intermediate region 30 may comprise a harder rubbery material. The material of the occlusional cushioning region 20 may have a lower shore hardness. The material of the intermediate region 30 may have a higher shore hardness.

Additionally or alternatively the intermediate region 30 and the occlusional cushioning region 20 may comprise the same material (i.e. the same material compound/composition), having the same inherent material properties, and the intermediate region 30 and the occlusional cushioning region 20 may have different internal structures, such as macroscopic or microscopic internal structures. For example, the occlusional cushioning may comprise a first material with a porous or perforated structure. The intermediate region 30 may comprise the first material with a solid and/or non-porous and/or non-perforated structure. The different internal structure of the occlusional cushioning region 20, compared to the intermediate region 30 may provide different properties to the occlusional cushioning region 20, compared to the intermediate region 30. For example, the perforated occlusional cushioning region 20 may have lower hardness than the solid and/or non- perforated intermediate region 30. The perforated occlusional cushioning region 20 may have lower stiffness than the solid and/or non- perforated intermediate region 30. The perforated occlusional cushioning region 20 may have lower Young's modulus than the solid and/or non- perforated intermediate region 30.

It can be appreciated that the modular nature of the mouthguard, i.e. the mouthguard having different components corresponding to different regions of the mouthguard with different material properties, may provide for the optimisation of the material properties of different aspects of the mouthguard with regard to the desired functioning of that region. For example, materials employed in labial regions, such as the impact protective region 10, and occlusional regions, such as the occlusional cushioning region 20, may be differentiated from one another. The effectiveness of the mouthguard may thus be improved.

It can be appreciated that the modular nature of the mouthguard may provide for the precise customisation of the mouthguard properties and/or functional performance. For example, the properties and/or functional performance of one region may be adjusted separately to the properties and/or functional performance of another region. For example, properties and/or functional performance of the impact protective region 10 may be adjusted separately to the properties and/or functional performance of the occlusional cushioning region 20 and/or the intermediate region 30. Preferably, the properties and/or functional performance of the impact protective region 10 may thus be changed with no or minimal change to the properties and/or functional performance of the occlusional cushioning region 20. For example, the impact protective function of the mouthguard may be adjusted with no or minimal change to the anti-concussive function of the mouthguard. The features of the occlusional cushioning region 20 may be changed with no or minimal change to the features and/or functioning of the impact protective region 10. The anti-concussive function of the mouthguard may be adjusted with no or minimal change to the impact protective function of the mouthguard. The different functions of the mouthguard may thus be separately and precisely customised to meet the needs of the end user, for example for use of the mouthguard in different sports.

The mouthguard may comprise interlocking portions 40. For example, an interface between different regions of the mouthguard may comprise interlocking portions 40. The interlocking portions 40 may be configured to be mechanically interlocking portions 40. Preferably, interlocking portions 40 are configured to mechanically interlock different regions of the mouthguard. For example, the exemplary mouthguards of Figures 1-7 comprise interlocking portions 40 at interfaces between different regions of the mouthguard.

The interlocking portions 40 may be configured to provide the attachment and/or fixation of different regions of the mouthguard. For example, the interlocking portions 40 may provide for the attachment of one region of the mouthguard to another region of the mouthguard. Preferably, the interlocking portions 40 provide for the attachment of a first mouthguard piece, comprising a first region of the mouthguard, to a second mouthguard piece, comprising another region of the mouthguard. In this way, the interlocking portions 40 may facilitate more efficient assembly of the mouthguard. For example, the interlocking portions 40 may provide that the mouthguard can be assembled without requiring a sealant and/or glue. The number of materials and cost of production of the mouthguard may thus be reduced and the efficiency of mouthguard fabrication may thus be improved.

An interface between the impact protective region 10 and the intermediate region 30 may comprise mechanical interlocking portions 40. Figures 1-7 show interlocking portions 40 between the impact protective region 10 and the intermediate region 30. The interlocking portions 40 may thus provide for the attachment of the impact protective region 10 to the intermediate region 30. Additionally or alternatively, an interface between the intermediate region 30 and the occlusional cushioning region 20 may comprise mechanical interlocking portions 40. Figures 1-2 show interlocking portions 40 between the intermediate region 30 and the occlusional cushioning region 20. The interlocking portions 40 may thus provide for the attachment of the occlusional cushioning region 20 to the intermediate region 30.

An interlocking portion 40 may comprise a plurality of interlocking features 41. An interlocking feature 41 may comprise, for example, a male connector or a female connector. For example, an interlocking portion 40 may comprise plug and socket/jack interlocking features 41. For example, an interlocking portion 40 may comprise pin and recess/hole interlocking features 41. For example, an interlocking portion 40 may comprise rail and groove interlocking features 41. For example, an interlocking portion 40 may comprise protrusion and recess interlocking features 41. Preferably, an interlocking portion 40 comprises a protrusion with a shape and a recess with a complementary shape.

Figures 1-7 show interlocking portions 40 between the impact protective region 10 and the intermediate region 30. The interlocking features 41 of the mouthguard piece comprising the impact protective region 10 have complementary shape to the interlocking features 41 of the mouthguard piece comprising the intermediate region 30.

An interlocking feature 41 may be formed from part of a mouthguard piece comprising a mouthguard region. For example, a mouthguard piece comprising a mouthguard region may additionally comprise an interlocking feature 41. For example, a mouthguard piece comprising a mouthguard region may additionally comprise a male connector and/or a female connector and/or a plug and/or a socket and/or a jack and/or a pin and/or a protrusion and/or a recess and/or a hole and/or a rail and/or a groove.

Optionally, an interlocking feature 41 comprising a hole may extend fully or partially through one or more mouthguard regions and/or pieces. For example, the mouthguard of Figures 2A and 2B comprises an intermediate region 30 comprising an interlocking feature that is a hole extending fully through the intermediate region 30. In the mouthguard of Figures 2A and 2B, the complementary interlocking feature is a protrusion of the occlusional cushioning region 20.

The mouthguard of Figures 6A and 6B comprises interlocking portions 40 between the impact protective region 10 and the intermediate region 30. An interlocking feature 41 may be a recess extending partially into the intermediate region 30. The complementary interlocking feature 41 may be a protrusion of the impact protective region 10. The impact protective region 10 has an external surface. The impact protective region 10 does not have an internal surface. In this way, the comfort and/or safety of the mouthguard may be increased by the cushioning of the protrusions of the impact protective region 10, by the intermediate region 30.

A mouthguard piece comprising a mouthguard region may comprise multiple interlocking features 41. A mouthguard piece comprising a mouthguard region may comprise multiple interlocking features 41 that are the same type of interlocking feature 41. A mouthguard piece comprising a mouthguard region may comprise multiple interlocking features 41 that are different types of interlocking feature 41.

The interlocking feature 41 may comprise a mouthguard piece that is separate from a mouthguard piece comprising a mouthguard region. For example, the interlocking feature 41 may comprise an interlocking piece, i.e. a separate interlocking piece. Figures 6A and 6B illustrate a mouthguard 100 comprising separate interlocking pieces. The separate interlocking piece of Figures 6A and 6B is a plug extending through complementary holes in the intermediate region 30 and impact protective region 10.

An interlocking piece 41 may comprise a male connector and/or a female connector and/or a plug and/or a socket and/or a jack and/or a pin and/or a recess and/or a hole and/or a rail and/or a groove.

An interlocking portion 40 may comprise part of a mouthguard piece comprising a mouthguard region and also comprise an interlocking piece, i.e. a separate interlocking piece. Preferably, an interlocking portion comprising an interlocking piece comprises parts of multiple mouthguard pieces comprising a mouthguard region. For example, the male and/or female component of an interlocking feature 41 may comprise multiple mouthguard pieces and/or multiple mouthguard regions. The mouthguard 100 of Figures 6A and 6B comprises interlocking portion 40 having male portion and female portion. The male portion is a plug/pin that is an interlocking piece. The female portion is a hole that comprises a mouthguard piece comprising the impact protective region 10 and a mouthguard piece comprising the intermediate region 30.

Alternatively, the plug/pin may be embedded in the impact protective region 10. I.e. the plug/pin of Figures 6A and 6B may be an interlocking feature 41 formed from part of the mouthguard piece comprising the impact protective region 10.

The mouthguard of Figure 1 comprises interlocking portion 40 between intermediate region 30 and occlusional cushioning region 20. Intermediate region 30 comprises interlocking feature 41 that is the female connector and occlusional cushioning region 20 comprises interlocking feature 41 that is the male connector. It can be appreciated that the intermediate region 30 may generally have greater hardness than the occlusional cushioning region 20. A female connector may thus comprise a region with greater hardness than the region of the corresponding male connector. A male connector may comprise a region with lower hardness than the region of the corresponding female connector. This may provide greater security of the interlocking portion 40 and/or greater stability of the interlocking portion 40 during deformation of the mouthguard, for example deformation of the mouthguard during teeth clenching and/or projectile impact. In this way, a harder female connector and a less hard male connector may reduce the risk of failure of the interlocking features 41.

The mouthguard 100 of figure 2A comprises interlocking portion 40 between impact protective region 10 and intermediate region 30. Intermediate region 30 comprises interlocking feature 41 that is the female connector and impact protective region 10 comprises interlocking feature 41 that is the male connector. A female connector may thus comprise a region with lower hardness than the region of the corresponding male connector. A male connector may comprise a region with greater hardness than the region of the corresponding female connector. This configuration may provide greater comfort to the user. The softer female connector may reduce the risk of injury to the user, for example injury resulting from projectile impact to a region with greater hardness. The softer female connector may provide greater security of an interlocking portion 40 and/or greater stability of the interlocking portion 40 during deformation of the mouthguard, for example deformation of the mouthguard during teeth clenching and/or projectile impact. In this way, the risk of failure of the interlocking features 41 may be reduced.

A region of the mouthguard may be detachable. For example a region of the mouthguard may be detachable from another region of the mouthguard. Preferably, a first mouthguard piece comprising a region of the mouthguard is detachable from a second mouthguard piece comprising a different region of the mouthguard. For example, the impact protective region 10 and/or the occlusional cushioning region 20 may be detachable from the mouthguard. Optionally, the impact protective region 10 and/or the occlusional cushioning region 20 are detachable from the intermediate region 30. A mouthguard piece comprising the impact protective region 10 may be detachable from a mouthguard piece comprising the intermediate region 30. A mouthguard piece comprising the occlusional cushioning region 20 may be detachable from a mouthguard piece comprising the intermediate region 30.

A region of the mouthguard may be configured to be replaceable. For example, a first region of the mouthguard may be configured to be replaceable with second region of the mouthguard of the same type as the first region. Optionally, the second region may have different properties to the first region. For example, a first impact protective region 10 may be replaced by a second impact protective region 10. The second impact protective region 10 may have different appearance and/or hardness and/or Young's modulus and/or other material property compared to the first impact protective region 10. A first occlusional cushioning region 20 may be replaced by a second occlusional cushioning region 20. The second occlusional cushioning region 20 may have different appearance and/or hardness and/or Young's modulus and/or other material property to the first occlusional cushioning region 20. The mouthguard material properties may thus be modified without the fabrication of a new mouthguard in its entirety. Preferably, a functioning of the mouthguard may be modified by the fabrication of a single new mouthguard piece. In this way, the mouthguard may be adapted more easily and efficiently.

A damaged and/or worn region of the mouthguard may be replaceable. For example, a first region of the mouthguard may be configured to be replaceable with second region of the mouthguard of the same type as the first region and having the same properties as the first region. For example, a damaged impact protective region 10 may be replaced by an undamaged and/or new impact protective region 10. The new impact protective region 10 may have the same appearance and/or hardness and/or Young's modulus and/or other material property as the damaged impact protective region 10. A damaged and/or worn occlusional cushioning region 20 may be replaced by an undamaged and/or new occlusional cushioning region 20. The new occlusional cushioning region 20 may have the same appearance and/or hardness and/or Young's modulus and/or other material property as the first occlusional cushioning region 20. In this way, a damaged and/or worn mouthguard may be repaired and the longevity of the mouthguard may be improved. Additionally, the efficiency of the repair of the mouthguard may be improved. Specifically, a region of the mouthguard may be replaced without requiring replacement of the entirety of the mouthguard.

An interlocking portion 40 may be configured to provide temporary attachment. For example, an interlocking portion 40 may be configured to provide the temporary mechanical interlocking of different mouthguard pieces and/or regions of the mouthguard. Optionally, the interlocking portions 40 may be configured to allow detachment of one mouthguard piece and/or region of the mouthguard from another mouthguard piece and/or region of the mouthguard. In this way, the interlocking portions 40 may improve the ease of assembly and disassembly of the mouthguard.

An interlocking feature 41 may be configured to be positioned so as to reduce discomfort for the user. For example, an interlocking feature 41 may be configured to be positioned in a region over the interface between adjacent teeth. For example, in Figure 5A-5C, the interlocking features 41 of the impact protective region 10, are configured to be positioned over an area between teeth. Preferably, an interlocking feature 41 may be positioned according to various factors. The factors of user requirements, type of interlocking feature 41, geometry of interlocking features 41, the orientation of male and female components, and/or the location of male and female components may be considered to determine the position of an interlocking feature 41. The protective performance of mouthguard may thus be improved and the accuracy and/or comfort of the fit of the mouthguard to the user may be improved.

An interlocking feature 41 may be configured to be positioned so as to reduce the risk failure, such as unintentional detachment of a region of the mouthguard resulting from impact or biting.

The mouthguard may be configured to provide a gap between the mouthguard and the teeth. By the improved dissipation of energy, the inclusion of a gap between the teeth and the mouthguard improves the protective performance of the mouthguard.

Preferably, a front aspect of the mouthguard-teeth interface is configured to comprise a gap. For example, a front aspect of the mouthguard-teeth interface may be configured to comprise an anterior offset 50 between the teeth and the mouthguard. For example, the geometry of the mouthguard may be such that a front aspect of the mouthguard does not directly abut/contact the teeth. The mouthguard 100 of Figure 7, for example, is configured to provide an anterior offset 50 between the teeth and the mouthguard. In this way, an internal surface of a front aspect of the mouthguard may be offset from the teeth. For example, an internal surface of the intermediate region 30 may be configured to be anteriorly offset from the teeth. By the greater dissipation of energy conferred by a gap between the teeth and the mouthguard, the protective performance of a mouthguard configured to provide a gap between the teeth is greater than the protective performance of a mouthguard configured to be in full contact with the teeth. The anterior offset may thus improve the protective performance of the mouthguard.

Optionally, the region of the mouthguard that is configured to be anteriorly offset from the teeth may correspond to a region of the mouthguard underlying the impact protective region 10. Preferably, a portion of the intermediate region 30 underlying the impact protective region 10 is configured to be anteriorly offset from the teeth. By the combined dissipative effects of an anterior offset 50 and an impact protective region 10, the inclusion of a gap between the teeth and a mouthguard comprising a hard insert, such as the impact protective region 10, provides a greater improvement in the protective performance of the mouthguard.

Optionally, the mouthguard may be configured to be offset from a front tooth. Preferably, the mouthguard may be configured to be anteriorly offset from a front tooth by at least 1 millimetre. For example, the mouthguard may be configured to be anteriorly offset from a front tooth by 1-2 millimetres. The mouthguard may be configured to be offset from a front tooth by more than 2 millimetres. The mouthguard may be configured to be anteriorly offset from a central incisor tooth and/or a lateral incisor tooth and/or a canine tooth. Preferably, the mouthguard is configured to be anteriorly offset from multiple front teeth. For example, the mouthguard may be configured to be anteriorly offset from one canine to the other canine. For example, the mouthguard may be configured to be anteriorly offset from the right canine, the right lateral incisor, the right central incisor, the left central incisor, the left lateral incisor, and the left canine.

The distance of the offset may vary across the width of the anterior offset 50. For example, the mouthguard may be configured to provide a greater distance of anterior offset 50 at a front aspect of the anterior offset 50 and/or a lesser distance of anterior offset 50 at a lateral aspect of the anterior offset 50.

Additionally or alternatively, an anterior portion of the mouthguard may comprise a gap within the mouthguard. For example, an anterior portion of the mouthguard may comprise a gap region 60. The gap region 60 may be at the interface between other regions of the mouthguard. Preferably, the gap region 60 may be between the impact protective region 10 and the intermediate region 30. In Figure 1, the gap region 60 is between the intermediate region 30 and the impact protective region 10. The gap region 60 may be surrounded by another region of the mouthguard. For example, the gap region 60 may be surrounded by the intermediate region 30. The gap region 60 may be surrounded by the impact protective region 10.

It can be appreciated that an anterior portion of the mouthguard may comprise multiple layers. An anterior portion of the mouthguard my comprise multiple layers including a gap region 60. An anterior portion of the mouthguard may comprise layers including a gap region 60 and/or an impact protective region 10 and/or an intermediate region 30. Where the gap region 60 is at the interface between regions, an anterior portion of the mouthguard may comprise three layers. The anterior portion of mouthguard 100 in Figure 1 comprises three layers; an impact protective region 10 layer, a gap region 60 layer, and an intermediate region 30 layer. The anterior portion of mouthguard 100 in Figure 7 comprises three layers; an impact protective region 10 layer, an intermediate region 30 layer, and an anterior offset 50 layer. Where the gap region 60 is surrounded by another region, an anterior portion of the mouthguard may comprise four layers.

A portion of the mouthguard that comprises the gap region 60 may correspond to a portion of the mouthguard underlying the impact protective region 10. Preferably, the gap region 60 is posterior to a portion of the impact protective region 10. Additionally or alternatively, the gap region 60 may be configured to cover a front tooth. The gap region 60 may be configure to be over a central incisor tooth and/or a lateral incisor tooth and/or a canine tooth. Preferably, the gap region 60 is configured to be over multiple front teeth. For example, the gap region 60 may be configured to be over the right canine, the right lateral incisor, the right central incisor, the left central incisor, the left lateral incisor, and the left canine.

Preferably the gap region 60 may have a thickness of at least 0.7 millimetres. For example, the gap region 60 may comprise a gap of 1-2 millimetres. The gap region 60 may have a thickness of more than 2 millimetres. The thickness of the gap region 60 may vary across the length of the gap region 60. For example, the mouthguard may be configured to have a greater thickness at an anterior aspect of the gap region 60 and/or a lesser thickness at a lateral aspect of the gap region 60.

In the same way as described above, for the feature of the anterior offset 50, the inclusion of a gap region 60 improves the protective performance of the mouthguard by the improved dissipation of impact energy. The inclusion of a gap region 60 between the teeth and a hard insert of the mouthguard, such as the impact protective region 10, provides a greater improvement to the protective performance of the mouthguard by the combined dissipative effects of the gap region 60 and the hard impact protective region 10.

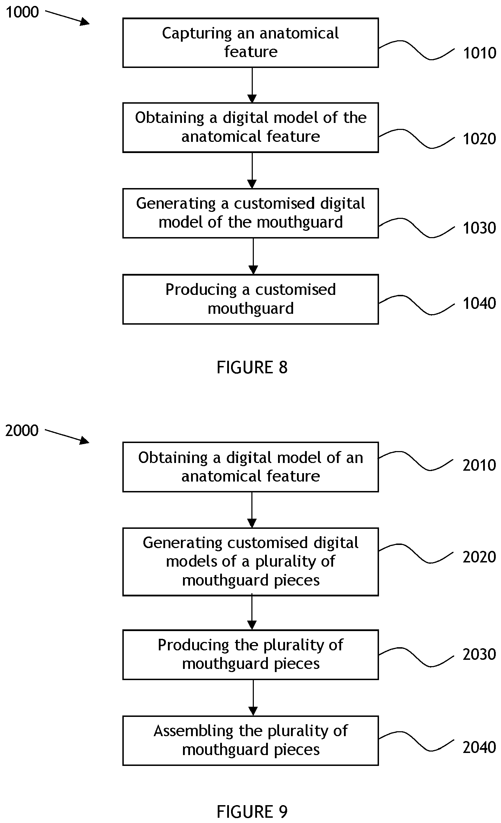

There are provided in Figures 8 and 9, methods 1000 and 2000 for the fabrication of a mouthguard, preferably for the fabrication of a mouthguard according to any aspect of the foregoing disclosure. It can be appreciated that one or more of the method steps of the method 1000 of Figure 8 may be carried out in combination with one or more of the steps of the method 2000 of Figure 9.

The mouthguard produced by the present method may comprise an impact protective region 10 and/or an occlusional cushioning region 20 and/or an intermediate region 30 according to the foregoing disclosure. The mouthguard produced by the present method may comprise any of the features of the foregoing disclosure.

Turning to Figure 8, a method 1000 of fabricating a mouthguard according to the present disclosure is provided. Method 1000 may optionally comprise; capturing 1010 an anatomical feature, obtaining 1020 a digital model of the anatomical feature, generating 1030 a customised digital model of the mouthguard, and/or producing 1040 a customised mouthguard.

Capturing 1010 an anatomical feature may comprise obtaining a scan of an anatomical feature, preferably the scan may be in a digital format. The scan may comprise any imaging, for example imaging obtained by exposure of an anatomical feature to radiation. Additionally or alternatively, capturing 1010 an anatomical feature may comprise obtaining an impression of an anatomical feature and obtaining a scan of the impression. The scan may comprise any imaging, for example imaging obtained by exposure of the impression to radiation. For example, the scan may comprise an oral scan, an X-ray scan, a CT (computer tomography) scan and/or an US (ultrasound) scan. Preferably the scan may be a 3D scan. By the present method, an anatomical feature may be more precisely and/or accurately and/or completely and/or reliably captured. For example, the geometry of the anatomical feature may be more accurately captured.

The anatomical feature may be a dental profile. The anatomical feature may comprise teeth of the upper jaw and/or teeth of the lower jaw and/or proximate gingiva of the upper jaw and/or proximate gingiva of the lower jaw.

The method of fabricating a mouthguard may comprise obtaining 1020 a digital model of the anatomical feature. For example, a scan of the anatomical feature may be converted to a digital model. A 3D scan of a dental profile may be converted to a digital model. Preferably, the digital model may be in STL format.

The method of fabricating a mouthguard may comprise generating 1030 a customised digital model of the mouthguard. Preferably, a customised digital model of the mouthguard may be generated based on a digital model of an anatomical feature, such as a digital model of a dental profile. Optionally, generating the customised digital model of the mouthguard may comprise subtracting the digital model of the dental profile from a digital mouthguard model. For example, a standard/generic digital mouthguard model may be customised by the subtraction of a digital model of an anatomical feature. By the present method, a mouthguard model may be more precisely and/or accurately customised to the captured anatomy.

The method fabricating a mouthguard may comprise providing an anterior offset 50 of the mouthguard from a front tooth. Additionally or alternatively, a method of fabricating a mouthguard may comprise providing a gap region 60 in an anterior portion of the mouthguard. For example, generating the customised digital model of the mouthguard may comprise providing an anterior offset 50 of the mouthguard from a front tooth and/or providing a gap region 60 in an anterior portion of the mouthguard.

Preferably, providing an anterior offset 50 of the mouthguard from a front tooth may be based on a digital model of an anatomical feature, such as a dental profile. A modified digital model of the anatomical feature may be generated by the application of an anterior offset 50 to the digital model of the anatomical feature. For example, an offset may be applied to the frontal teeth of a digital model of a dental profile, to generate a modified digital model of the dental profile. Preferably, the offset may be 1-2 millimetres. Optionally, the anterior offset 50 may be applied to a central incisor tooth and/or a lateral incisor tooth and/or a canine tooth. Preferably, the anterior offset 50 may be applied from one canine to the other canine. For example, the anterior offset 50 may be applied from the right canine, the right lateral incisor, the right central incisor, the left central incisor, the left lateral incisor, and the left canine.

Providing an anterior offset 50 may comprise digital lamination of a portion of the mouthguard model. For example, a portion of the mouthguard model corresponding to an intermediate region 30 of the mouthguard may be digitally laminated. A portion of the mouthguard model corresponding to a U-shaped rail component of the mouthguard may be digitally laminated. Digital lamination may comprise lamination with a preferred thickness. The preferred thickness may be 1-2 millimetres. Digital lamination may comprise lamination of a preferred aspect of the mouthguard, based on the captured anatomical feature. For example, a preferred aspect of the mouthguard may comprise an aspect of the mouthguard overlying a central incisor tooth and/or a lateral incisor tooth and/or a canine tooth of the digital model of the dental profile. A modified digital model of the dental profile may be subtracted from the digitally laminated portion of the mouthguard model, optionally generating the space of the anterior offset 50 between an aspect of the mouthguard and an aspect of the anatomical feature. For example, the space of the anterior offset 50 may be between the intermediate region 30 of the mouthguard and a front tooth.

The method of fabricating a mouthguard may comprise providing a gap region 60 in an anterior portion of the mouthguard. Providing a gap region may comprise digital lamination of a portion of the mouthguard model. For example, a portion of the mouthguard model corresponding to an intermediate region 30 of the mouthguard may be digitally laminated and a frontal layer behind an impact protective region 10 may be removed from the digital model of the intermediate region 30. Optionally, the gap region 60 may be applied between an intermediate region 30 and an impact protective region 10, and/or at a region of the mouthguard configured to be positioned over a central incisor tooth and/or a lateral incisor tooth and/or a canine tooth. Preferably, the gap region 60 may be applied from one canine to the other canine. For example, the gap region 60 may be applied from the right canine, the right lateral incisor, the right central incisor, the left central incisor, the left lateral incisor, and the left canine. The preferred width of the gap region 60 (i.e. gap thickness) may be from 1-2 millimetres.

By the present method, a space between the teeth and at least a portion of the mouthguard and/or a gap between mouthguard components may be provided. Inclusion of a space between the teeth and the mouthguard and/or a gap between mouthguard components may improve the protective performance of the mouthguard. The inclusion of a space between the teeth and a portion of the mouthguard and/or a gap between mouthguard components comprising a hard insert, such as the impact protective region 10, may improve the protective performance of the mouthguard. For example, the protective performance of the mouthguard configured to provide an anterior offset from the teeth may be greater than the protective performance of a mouthguard configured to be in full contact with the teeth.

Generating 1030 a customised digital model of the mouthguard may comprise adjusting the geometry of the digital mouthguard model. A lateral aspect of the mouthguard model may correspond to a buccal and/or labial aspect of the mouthguard. The geometry of the digital mouthguard model may be adjusted such that a lateral aspect of the mouthguard is configured to completely cover a lateral aspect of the teeth. Optionally, the geometry of the digital mouthguard model may be adjusted such that a lateral aspect of the mouthguard is configured to only partially cover a lateral aspect of the proximate. A medial aspect of the mouthguard model may correspond to a tongue and/or palatal aspect of the mouthguard. The geometry of the digital mouthguard model may be adjusted such that a medial aspect of the mouthguard is configured to only partially cover a medial aspect of the teeth. Preferably, a medial aspect of the teeth is not completely covered by the mouthguard. Adjustment of the geometry may provide improved protective effect of the corresponding mouthguard and/or improved comfort of the wearer.

Generating 1030 a customised digital model of the mouthguard may comprise adjusting the thickness of the mouthguard, for example adjusting the thickness of a region of the mouthguard. The thickness of an impact protective region 10, for example an externally exposed impact protective region 10, may be adjusted. The thickness of an intermediate region 30, for example an internally and/or externally exposed intermediate region 30, may be adjusted. The thickness of an occlusional cushioning region 20, for example an internally exposed occlusional cushioning region 20, may be adjusted.

It can be appreciated that adjustment of the thickness of the mouthguard and/or a region of the mouthguard, can vary the protective performance of the mouthguard. For example, increasing the thickness of the mouthguard and/or a region of the mouthguard may increase the degree of protection of the mouthguard and/or a region of the mouthguard. The degree of protection of the mouthguard can be tailored to the needs of the user, for example, to suit different sports. Increasing the thickness of the mouthguard and/or a region of the mouthguard may decrease the level of comfort of the user. The thickness of the mouthguard and/or a region of the mouthguard may be a compromise between degree of protection and user comfort.

The thickness of the impact protective region 10 may be adjusted to provide sufficient protection from trauma. The thickness of the impact protective region 10 may be adjusted to provide a desired level of comfort to the user. For example, the thickness of the impact protective region 10 may be adjusted to provide a compromise between the level of impact protection and the level of user comfort. Preferably, the thickness of the impact protective region 10 may be from 0.8-4.0 millimetres.

The thickness of the occlusional cushioning region 20 may be adjusted to provide sufficient cushioning during clenching. The thickness of the occlusional cushioning region 20 may be adjusted to provide a desired level of comfort to the user. For example, the thickness of the occlusional cushioning region 20 may be adjusted to provide a compromise between the level of cushioning and the level of user comfort. Preferably, the thickness of the occlusional cushioning region 20 may be from 1.5-6.0 millimetres.

The thickness of the intermediate region 30 may be adjusted to provide sufficient protection from trauma. The thickness of the intermediate region 30 may be adjusted to provide a desired level of comfort to the user. For example, the thickness of the intermediate region 30 may be adjusted to provide a compromise between the level of protection and the level of user comfort. Preferably, the thickness of the intermediate region 30 may be from 2.5-5.0 millimetres. The thickness of the intermediation region 30 may vary between different portions of the intermediate region 30. For example, the thickness of the intermediate region may vary across different portions from 1 to 4 millimetres.

The method of fabricating a mouthguard may comprise producing 1040 a customised mouthguard. Producing 1040 a customised mouthguard may comprise fabricating the customised digital model of the mouthguard by 3D printing. By the present method, uniformity of thickness of the mouthguard may be improved.

The mouthguard may be printed using a 3D printable material, such as a resin (for example for SLA (stereolithography), DLP (digital light processing), LED (light-emitting diode), and/or Polyjet printing) and/or filament (for example for FDM (fused deposition modelling) printing).

The 3D printable material may have material properties optimised for use in the human body. For example, the 3D printable material may have material properties optimised for contact with human tissue. The 3D printable material may comprise a biocompatible material. The 3D printable material may have improved biocompatibility.

The 3D printable material may have material properties to improve the longevity of the mouthguard. For example, the 3D printable material may comprise a material with improved tear resistance.

The 3D printable material may comprise a commercially available resin. The 3D printable material may comprise custom designed 3D printable materials. The 3D printable material may comprise a photocurable resin. The 3D printable material may comprise a 3D printable biocompatible resin. Preferably, the 3D printable material may comprise a 3D printable biocompatible dissipative resin.

Producing 1040 a customised mouthguard may comprise post-printing processes. For example, producing 1040 a customised mouthguard may comprise washing and/or curing steps. The printed mouthguard and/or a printed component of the mouthguard may be exposed to radiation, such as UV radiation.

For example, an impact protective region 10 of the mouthguard may be printed by Form3B printer (Formlabs), optionally using FLSGAM01 resin (Formlabs), optionally by a printing set up according to manufacturer instructions. The intermediate region 30 of the mouthguard may be printed by Miicraft printer (Miicraft), optionally using , optionally by a printing set up according to manufacturer instructions. The occlusional cushioning region 20 of the mouthguard may be printed by ProJet printer (3D Systems), optionally using M2E-BK70 resin (3D Systems), optionally by a printing set up according to manufacturer instructions.

It can be appreciated that the fabrication parameters, for example parameters of the printing process and/or washing process and/or curing process, may be adjusted. The adjustment of the fabrication parameters may vary the properties of the fabricated mouthguard. For example, the degree of biocompatibility and/or tear resistance and/or dissipative capacity and/or ultimate strain and/or other mechanical properties may be varied. The properties of the fabricated mouthguard may be optimised and/or tailored according to the needs of the user.

Turning to figure 9, a method 2000 of fabricating a mouthguard according to the present disclosure is provided. The method 2000 may optionally comprise; obtaining 2010 a digital model of an anatomical feature, generating 2020 customised digital models of a plurality of mouthguard pieces, producing 2030 the plurality of mouthguard pieces, and/or assembling 2040 the plurality of mouthguard pieces.

The method may optionally comprise capturing an anatomical feature, for example as described above in the step of capturing 1010.

The method may optionally comprise obtaining 2010 a digital model of the anatomical feature, for example as described above in the step of obtaining 1020.

The method may optionally comprise generating 2020 customised digital models of a plurality of mouthguard pieces. The method may optionally comprise generating a first customised digital model of a first mouthguard piece. The first mouthguard piece may be a mouthguard piece comprising an impact protective region 10 of a mouthguard. The method may optionally comprise generating a second customised digital model of a second mouthguard piece. The second mouthguard piece may be a mouthguard piece comprising an occlusional cushioning region 20 of a mouthguard. The method may optionally comprise generating a third customised digital model of a third mouthguard piece. The third mouthguard piece may be a mouthguard piece comprising an intermediate region 30 of a mouthguard.

Preferably, a customised digital model of a mouthguard piece may be generated based on a digital model of an anatomical feature, such as a digital model of a dental profile. Optionally, generating the customised digital model of a mouthguard piece may comprise subtracting the digital model of the dental profile from a digital mouthguard piece model. For example, a standard/generic digital mouthguard piece model may be customised by the subtraction of a digital model of an anatomical feature. By the present method, a mouthguard piece model may be more precisely and/or accurately customised to the captured anatomy.

Generating 2020 customised digital models of a plurality of mouthguard pieces may optionally comprise subtracting a digital model of a mouthguard piece from a digital model of another mouthguard piece. For example, one of the first, second, or third customised digital models of a mouthguard piece may be subtracted from a different one of the first, second, or third customised digital models of a mouthguard piece. For example, generating a customised digital model of a mouthguard piece comprising an intermediate region 30 of a mouthguard, may comprise subtracting a customised digital model of a mouthguard piece comprising an occlusional cushioning region 20 of the mouthguard from a customised digital model of a mouthguard piece comprising an intermediate region 30 of the mouthguard. Generating a customised digital model of a mouthguard piece comprising an intermediate region 30 of a mouthguard, may comprise subtracting a customised digital model of a mouthguard piece comprising an impact protective region 10 of the mouthguard from a customised digital model of a mouthguard piece comprising an intermediate region 30 of the mouthguard. By the present method, complementary shapes of the mouthguard pieces may be precisely generated.

By the present method, a customised digital model of a mouthguard piece may be configured for the production of a mouthguard piece comprising a mounting surface for another mouthguard piece. For example, a customised digital model of a mouthguard piece comprising an intermediate region 30 may be configured for the production of a mouthguard piece comprising an intermediate region 30 comprising a mounting surface for a mouthguard piece comprising an impact protective region 10 and/or a mounting surface for a mouthguard piece comprising an occlusional cushioning region 20. For example, a customised digital model of a mouthguard piece comprising an intermediate region 30 may comprise a recess that is configured to accommodate a customised digital model of a mouthguard piece comprising an impact protective region 10. A customised digital model of a mouthguard piece comprising an intermediate region 30 may comprise a recess that is configured to accommodate a customised digital model of a mouthguard piece comprising an occlusional cushioning region 20. Optionally, a customised digital model of a mouthguard piece comprising an intermediate region 30 may comprise a first recess that is configured to have a complementary shape to a customised digital model of a mouthguard piece comprising an impact protective region 10. A customised digital model of a mouthguard piece comprising an intermediate region 30 may comprise a second recess that is configured to have a complementary shape to a customised digital model of a mouthguard piece comprising an occlusional cushioning region 20.

Generating 2020 customised digital models of a plurality of mouthguard pieces may optionally comprise adjusting the thickness of the mouthguard, for example adjusting the thickness of a mouthguard piece. The thickness of a mouthguard piece comprising an impact protective region 10, for example an externally exposed impact protective region 10, may be adjusted. The thickness of a mouthguard piece comprising an intermediate region 30, for example an internally and/or externally exposed intermediate region 30, may be adjusted. The thickness of a mouthguard piece comprising an occlusional cushioning region 20, for example an internally exposed occlusional cushioning region 20, may be adjusted.

Optionally, the mouthguard pieces are configured to mechanically interlock. For example, one of the first, second or third mouthguard pieces may be configured to mechanically interlock with a different one of the first, second or third mouthguard pieces. A mouthguard piece comprising an intermediate region 30 may be configured to mechanically interlock with a mouthguard piece comprising an impact protective region 10. A mouthguard piece comprising an intermediate region 30 may be configured to mechanically interlock with a mouthguard piece comprising an occlusional cushioning region 20. A mouthguard piece comprising an impact protective region 10 may be configured to mechanically interlock with a mouthguard piece comprising an occlusional cushioning region 20.

The mouthguard pieces may be configured to chemically bond. For example, one of the first, second or third mouthguard pieces may be configured to chemically bond with a different one of the first, second or third mouthguard pieces. A mouthguard piece comprising an intermediate region 30 may be configured to chemically bond with a mouthguard piece comprising an impact protective region 10. A mouthguard piece comprising an intermediate region 30 may be configured to chemically bond with a mouthguard piece comprising an occlusional cushioning region 20. A mouthguard piece comprising an impact protective region 10 may be configured to chemically bond with a mouthguard piece comprising an occlusional cushioning region 20. The chemical bonding of two mouthguard pieces fixes the two pieces together. For example, the chemical bonding of two mouthguard pieces can prevent the subsequent separation of the two bonded pieces.

Generating 2020 customised digital models of a plurality of mouthguard pieces may comprise providing an interlocking feature 41. A customised digital model of a mouthguard piece comprising a region of the mouthguard may comprise an interlocking feature 41. For example, a customised digital model of a mouthguard piece comprising an impact protective region 10 and/or an occlusional cushioning region 20 and/or an intermediate region 30 may comprise an interlocking feature 41. Providing an interlocking feature 41 may comprise shaping the interlocking feature 41 on a customised digital model of a mouthguard piece comprising a region of the mouthguard. Additionally or alternatively, providing an interlocking feature 41 may comprise providing a digital model of an interlocking feature 41. For example, a digital model of an interlocking feature 41 that does not comprise a mouthguard region, i.e. a digital model of an interlocking feature 41 that is separate from a customised digital model of a mouthguard piece comprising a mouthguard region.

An interlocking feature 41 on a digital model of a mouthguard piece may be subtracted from a digital model of another mouthguard piece. For example, a male connector shaped on a digital model of a mouthguard piece may be subtracted from a digital model of another mouthguard piece. A complementary female connector, i.e. having complementary shape to the male connector, may be shaped on the digital model of another mouthguard piece. By the present method, interlocking features 41 may be precisely shaped on the digital models. For example, complementary interlocking features 41 may be shaped on the digital models of mouthguard pieces configured to be mechanically interlocked.

A portion of a digital model of an interlocking feature 41, for example a separate digital model of an interlocking feature 41, may be subtracted from a digital model of a mouthguard piece. A first portion of a digital model of an interlocking feature 41, may be subtracted from a first customised digital model of a mouthguard piece. A second portion of a digital model of an interlocking feature 41, may be subtracted from a second customised digital model of a mouthguard piece. For example, a distal portion of a digital model of a pin-shaped interlocking feature 41 may be subtracted from a digital model of a first mouthguard piece comprising a first region of the mouthguard. A proximal portion of a digital model of a pin-shaped interlocking feature 41 may be subtracted from a digital model of a second mouthguard piece comprising a second region of the mouthguard.

For example, a distal portion of a digital model of a pin-shaped interlocking feature 41 may be subtracted from a digital model of a mouthguard piece comprising an intermediate region 30 of the mouthguard. A proximal portion of a digital model of a pin-shaped interlocking feature 41 may be subtracted from a digital model of a mouthguard piece comprising an impact protective region 10 of the mouthguard. A complementary hole to the pin-shaped interlocking feature 41 may be shaped on a digital model of a mouthguard piece comprising a region of the mouthguard. By the present method, interlocking features 41 may be precisely shaped on the digital models. It can be appreciated that the foregoing steps may be applied to any shape of interlocking feature 41. A interlocking feature 41 with shape complementary to another interlocking feature 41 may be generated.

An interlocking feature 41 may be positioned so as to reduced discomfort for the user. For example, an interlocking feature 41 may positioned on a digital model of a mouthguard piece according to the anatomy of the user. Preferably, an interlocking feature 41 may configured to be positioned over an area between a first tooth and a second tooth. For example, an interlocking feature 41 may be shaped on an aspect of a digital model of a mouthguard piece that is configured to cover an area between two teeth.

The method may optionally comprise producing 2030 the plurality of mouthguard pieces. Producing 2030 the plurality of mouthguard pieces may comprise fabricating the customised digital models of the mouthguard pieces by 3D printing. Preferably, first and/or second and/or third mouthguard pieces are separately 3D printed. For example, a first mouthguard piece comprising an impact protective region 10 of a mouthguard may be 3D printed. A second mouthguard piece comprising an occlusional cushioning region 20 of a mouthguard may be 3D printed. A third mouthguard piece comprising an intermediate region 30 of a mouthguard may be 3D printed. The mouthguard pieces may be produced according to known methods and/or according to the methods discussed herein. For example, the mouthguard pieces may be fabricated according to the 3D printing methods discussed herein.

Producing 2030 the plurality of mouthguard pieces may comprise concurrently 3D printing the first and/or second and/or mouthguard pieces. For example, the first and/or second and/or third mouthguard pieces may printed at the same time and/or in the same process and/or using a single printer, such as a multijet printer. Optionally, the first and/or second and/or third mouthguard pieces may be concurrently printed using different materials

Producing 2030 the plurality of mouthguard pieces may comprise post-printing processes. For example, producing a customised mouthguard piece may comprise washing and/or curing steps. For example, the printed mouthguard piece may be exposed to radiation, such as UV radiation.

The plurality of mouthguard pieces may be assembled 2040. Optionally, mouthguard pieces may be mechanically interlocked. For example, a mouthguard piece comprising an intermediate region 30 may be mechanically interlocked with a mouthguard piece comprising an impact protective region 10. A mouthguard piece comprising an intermediate region 30 may be mechanically interlocked with a mouthguard piece comprising an occlusional cushioning region 20. A mouthguard piece comprising an impact protective region 10 may be mechanically interlocked with a mouthguard piece comprising an occlusional cushioning region 20. Mechanical interlocking of the mouthguard pieces may be carried out without requiring a glue and/or sealant.

Optionally, mouthguard pieces may be configured to be detachable from one another. For example, a first mouthguard piece that has been mechanically interlocked with a second mouthguard piece may be detachable from the second mouthguard piece. A mouthguard piece comprising an occlusional cushioning region 20 that has been mechanically interlocked with a mouthguard piece comprising an intermediate region 30 may be detachable from the mouthguard piece comprising an intermediate region 30. A mouthguard piece comprising an impact protective region 10 that has been mechanically interlocked with a mouthguard piece comprising an intermediate region 30 may be detachable from the mouthguard piece comprising an intermediate region 30.

The mouthguard pieces may be chemically bonded. For example, a mouthguard piece comprising an intermediate region 30 may be chemically bonded to a mouthguard piece comprising an impact protective region 10. A mouthguard piece comprising an intermediate region 30 may be chemically bonded to a mouthguard piece comprising an occlusional cushioning region 20. A mouthguard piece comprising an impact protective region 10 may be chemically bonded to a mouthguard piece comprising an occlusional cushioning region 20. The chemical bonding of two mouthguard pieces fixes the two pieces together. For example, the chemical bonding of two mouthguard pieces can prevent the subsequent separation of the two bonded pieces.

## Claims

1. A mouthguard, comprising:
an externally exposed impact protective region defined by a first material property and configured to cover a front tooth;
an internally exposed occlusional cushioning region defined by a second material property and configured to cover a molar tooth; and
an internally exposed intermediate region defined by a third material property and configured to be located between the occlusional cushioning region and the impact protective region;
wherein said first, second and third material properties are different.

2. A mouthguard, comprising:
an externally exposed impact protective region defined by a first material property and configured to cover a front tooth; and
an internally exposed occlusional cushioning region defined by a second material property and configured to cover a molar tooth;
wherein said first and second material properties are different;
wherein said externally exposed impact protective region does not cover a molar tooth; and/or
wherein said internally exposed occlusional cushioning region does not cover a front tooth;
optionally wherein the mouthguard further comprises an intermediate region defined by a third material property and configured to be located between the occlusional cushioning region and the impact protective region; and
wherein said third material property is different from said first and second material properties.

3. The mouthguard of any one of the preceding claims, wherein at least one interface between regions comprises a mechanical interlocking portion, wherein the mechanical interlocking portion comprises an interlocking feature;
optionally wherein the interlocking feature is configured to be positioned so as to reduce discomfort for the user;
optionally wherein the interlocking feature is configured to be positioned over an area between a first tooth and a second tooth; and
optionally wherein an interface between the intermediate region and the occlusional cushioning region comprises mechanical interlocking portions; and/or
wherein an interface between the intermediate region and the impact protective region comprises mechanical interlocking portions.

4. The mouthguard of any one of the preceding claims, wherein the intermediate region and the occlusional cushioning region comprise the same material; and/or
wherein the internal structure of the intermediate region is different to the internal structure of the occlusional cushioning region.

5. The mouthguard of any one of the preceding claims, wherein the intermediate region and/or the occlusional cushioning region comprises an elastomeric material and/or a polymeric material; and/or
wherein the occlusional cushioning region comprises a material that can resist at least 50% tensile strain.

6. The mouthguard of any one of the preceding claims, wherein the hardness of the intermediate region is greater than the hardness of the occlusional cushioning region; and/or
wherein the hardness of the intermediate region is from 60 to 95 in Shore A scale; optionally wherein the hardness of the intermediate region is from 80 to 90 in Shore A scale; and/or
wherein the hardness of the occlusional cushioning region is from 40 to 80 in Shore A scale; optionally wherein the hardness of the occlusional cushioning region is from 55 to 75 in Shore A scale.

7. The mouthguard of any one of the preceding claims, wherein at least one region is configured to be detachable from another region.

8. The mouthguard of any one of the preceding claims, wherein the mouthguard comprises a first material with a first inherent material property and a second material with a second inherent material property;
wherein said first inherent material property is different from said second inherent material property.

9. The mouthguard of any one of the preceding claims, wherein the impact protective region comprises a thermoplastic material and/or a thermoset material; and/or
wherein the Young's modulus of the impact protective region is from 0.5 to 5 GPa; optionally wherein the Young's modulus of the impact protective region is from 2 to 3 GPa;
optionally wherein the impact protective region comprises a stress concentration feature;
optionally wherein the impact protective region is a first impact protective region that is configured to be detachable from another region of the mouthguard;
optionally wherein the first impact protective region may be interchangeable with a second impact protective region; and
optionally wherein the second impact protective region comprises different properties to the first impact protective region; or
wherein the second impact protective region comprises the same properties as the first impact protective region; and/or
wherein the thickness of the impact protective region is from 0.9 to 2.0 millimetres and/or the thickness of the occlusional cushioning region is from 2.0 to 5.0 millimetres and/or the thickness of the intermediate region is from 3.0 to 4.5 millimetres .

10. The mouthguard of any one of the preceding claims, wherein the mouthguard is configured to be anteriorly offset from a front tooth by at least 1 millimetre;
optionally wherein said front tooth from which the mouthguard is configured to be anteriorly offset is a central incisor tooth; and/or
wherein said front tooth from which the mouthguard is configured to be anteriorly offset is a central incisor tooth and/or a lateral incisor tooth and/or a canine tooth; and/or
wherein the mouthguard further comprises a gap region in an anterior portion of the mouthguard, wherein said gap region comprises a gap of at least 1 millimetre;
optionally wherein the gap region is configured to be over a front tooth;
optionally wherein said front tooth is a central incisor tooth; and/or
wherein said front tooth is a central incisor tooth and/or a lateral incisor tooth and/or a canine tooth.

11. The mouthguard of any one of the preceding claims, wherein the occlusional cushioning region is configured to cover a single molar tooth; and/or
wherein the occlusional cushioning region is configured to cover two molar teeth; and/or
wherein the occlusional cushioning region is configured to cover a premolar tooth; and/or
wherein the impact protective region is configured to cover two incisor teeth; and/or
wherein the impact protective region is configured to cover a central incisor tooth and/or a lateral incisor tooth and/or a canine tooth.

12. A 3D printed mouthguard, comprising:
a first mouthguard piece; and
a second mouthguard piece;
wherein said first and second mouthguard pieces are configured to mechanically interlock and/or chemically bond; and
wherein said first mouthguard piece is optionally detachable from said second mouthguard piece.

13. A method of fabricating a mouthguard, the method comprising:
obtaining a digital model of a dental profile;
generating a customised digital model of the mouthguard based on said digital model of the dental profile;
wherein said generating said customised digital model of the mouthguard based on said digital model of the dental profile includes;
providing an anterior offset of the mouthguard from a front tooth; or
providing a gap region in an anterior portion of the mouthguard; and
3D printing a mouthguard based on the customised digital model of the mouthguard;
optionally wherein the mouthguard comprises an externally exposed impact protective region defined by a first material property and configured to cover a front tooth;
optionally wherein said anterior offset of the mouthguard from a front tooth is an anterior offset from a central incisor tooth and/or wherein said anterior offset of the mouthguard from a front tooth is an anterior offset from a central incisor tooth and/or a lateral incisor tooth and/or a canine tooth; or
said gap region is configured to be over a front tooth optionally wherein said front tooth is a central incisor tooth and/or a lateral incisor tooth and/or a canine tooth.

14. A method of fabricating a mouthguard, the method comprising:
obtaining a digital model of a dental profile;
generating a first customised digital model of a first mouthguard piece;
generating a second customised digital model of a second mouthguard piece;
wherein said first and second customised digital models are generated based on said digital model of the dental profile;
wherein said first and second mouthguard pieces are configured to mechanically interlock and/or chemically bond;
separately or concurrently 3D printing said first and second mouthguard pieces based on said first and second customised digital models; and
mechanically interlocking and/or chemically bonding the first and second mouthguard pieces;
wherein the first mouthguard piece is optionally detachable from the second mouthguard piece.

15. A method of fabricating a mouthguard, the method comprising:
obtaining a digital model of a dental profile;
generating a first customised digital model of a first mouthguard piece;
generating a second customised digital model of a second mouthguard piece;
generating a third customised digital model of a third mouthguard piece;
wherein said first, second and third customised digital models are generated based on said digital model of the dental profile;
wherein one of said first, second and third mouthguard pieces are configured to mechanically interlock or chemically bond with a different one of said first, second and third mouthguard pieces; and
separately or concurrently 3D printing said first, second and third mouthguard pieces based on said first, second and third customised digital models.
